# EUROPEAN PATENT SPECIFICATION

(11) **EP 2 530 005 B1**
(45) Date of publication and mention of the grant of the patent: **20.11.2013**
(21) Application number: 11168460.1
(22) Date of filing: 01.06.2011
(51) Int. Cl.: B62K 5/025, B62K 21/08

(54) **Mobility scooter with automatic steering force altering**
Mobilitätsroller mit automatischer Lenkkraftveränderung
Scooter de mobilité doté d'une altération automatique de la force de direction

(43) Date of publication of application: 05.12.2012
(73) Proprietor: SUNRISE MEDICAL LIMITED, Stourbridge, West Midlands DY8 4PS (GB)
(72) Inventor: Davies, David, Telford, Shropshire, TF2 9NQ (GB); Tasker, Peter J., Ditton Priors, Shropshire, WV 16 6SU (GB)
(74) Representative: Holzwarth-Rochford, Andreas

(56) References cited:
- EP-A1- 1 561 677
- EP-A2- 1 247 729
- DD-A1- 257 769
- DE-A1- 2 823 354
- GB-A- 2 042 436
- JP-A- 2007 331 696
- US-A- 4 811 807
- US-A1- 2007 063 502
- US-A1- 2009 198 411

## Description

The present invention relates to a mobility scooter comprising at least one first wheel and at least one second wheel, wherein the first wheel acts as a drive wheel, the second wheel acts as a steerable wheel and a steering angle of the second wheel is measured relative to a steering position of the second wheel corresponding to a forward traveling direction of the mobility scooter and a method of controlling a steering of a mobility scooter according to claim 1 comprising at least one first wheel acting as a drive wheel and at least one second wheel acting as a steerable wheel, wherein a steering angle of the second wheel is measured relative to a steering position of the second wheel corresponding to a forward or a rearward traveling direction of the conveyance device.

Passenger conveyance devices are, for example known in the form of Mobility Scooters, having a single motor and transaxle differential gear box coupled to two drive wheels, that operate at various speeds, up to for example 15kph. The speed is controlled by the user via an input device, often referred to as `Wig-wag' or speed actuator.

As there are no restrictions to the steering angle except end stops predefined by general constructional requirements of the passenger conveyance device, it is possible for the user to turn a steering device, for example a handle bar/steering wheel, to any angle up to the maximum physically allowed, whilst traveling at any speed that the vehicle is capable of To both maximize indoor maneuverability and to enable users with low upper body strength the effort required to turn the steering assembly is designed to be low. Therefore it is quite possible for the user to turn the steering to the angular physical limit quickly, easily whilst the scooter is traveling at all speeds it is capable of.

Powered Mobility Scooters have often what is referred to as manual steering. The steering is in most cases achieved either directly via a tiller, through a fork arrangement, especially to the single front wheel, or via a tiller and through a system of ball joints and links. The tiller being a column that links the steering elements connected to the wheel(s) and the steering device. The steering device is often a type of handle bar or steering wheel that enables the user to turn the wheel(s). The angle to which the wheels can turn left or right central alignment to the main longitudinal axis is usually mechanically limited and the limit is fixed and often limited to the physical space the wheels have within the vehicle structure. For maximum indoor maneuverability then the maximum angle is desired. Often the steering is only limited to an angle at which the function of the wheels ceases as they are unable to maintain any grip with the surface they operate on as the vehicle travels forwards or backwards.

Whilst traveling at high or maximum speed and simultaneously turning sharply the steering assembly, it is possible to make a passenger conveyance device unstable, especially when having two rear drive wheels and one front steerable wheel. During an attempted transition from traveling straight forward to turning, centrifugal forces cause the Center of Gravity (CoG) to move towards the outside of the turn. This force can lead to the device, especially a scooter loosing stability and at worst tipping over or at best making the occupant or user very uncomfortable.

An attempt to resolve this issue are devices that sense rotational movement of the steering assembly and if the steering is turned then the scooter speed is reduced as described for example in US 2007/0063502A1, which discloses the features of the preamble of claim 1.

Anyhow these devices have the following drawbacks:
1. The passenger conveyance device, especially if traveling at a relatively high speed, cannot react quickly enough and slow down fast enough, therefore the loss of stability still occurs. Especially in emergency situations, when a sharp turn has to be made at a high speed to go around an obstacle, the slow down is not as fast as necessary to avoid a tipping over in case a user especially uses the maximum steering angle.
2. In order to travel in a straight or near straight line on sloped or uneven surfaces the users needs to make regular small input to the steering to correct the direction of travel. Small steering corrections are interpreted as turns and the speed is reduced un-necessarily.
Furthermore a generic passenger conveyance device is for example known from DD 257 769 Al disclosing a circuit arrangement for an electro-mechanical steering mechanism of a wheelchair. A target value setting device is controllable by a user, wherein by the setting device a steering voltage is supplied. An electronic steering device sets the steering angle of a steerable wheel by setting a steering current. Depending on a speed of the wheelchair a range of the steering current is decreased such that a maximum steering angle becomes progressively smaller with increasing drive speed.

A comparable passenger conveyance device is also known from GB 2 042 436 A disclosing an invalid wheelchair control. The control comprise a control system arranged such that with a fast driving speed the steering deflection of steering wheels is controlled so as to be small and with a slow driving speed, the deflection of steering wheels is controlled so as to be large.

Also DE 28 23 354 Al discloses a passenger conveyance device, whereby this document is directed to a power steering device for a wheelchair. A polarity of a voltage applied to a steering support motor, and thereby the direction of steering and the magnitude of a steering lock are set by a target value potentiometer. The target value potentiometer is mechanically connected to a direction selection lever with which a person sitting in the wheelchair can set the direction and magnitude of the steering lock of the steerable wheels. By lowering a sensitivity to input signals given with the selection lever at higher speeds also for higher speeds a steering angle range is reduced.

However the used systems have the drawback that it is not possible for a user of the passenger conveyance device to use a full steering angle range, especially in emergency situations. Such an emergency situation would be for example that a user has to go around an obstacle.

It is thus an object of the claimed invention to further develop the generic passenger conveyance device and the generic method to overcome the disadvantages known in the state the art, especially to allow a passenger a steering within a fixed maximum steering angle range at every time independent from the traveling speed of the device passenger conveyance, for example in emergency situations, and simultaneously avoid reliably instable situations of the device as well as negative influences on the driving comfort.

This object is achieved with regard to the mobility scooter as described in claim 1 in that based on a first value representative for a speed of the mobility scooter, especially of the first wheel, a force necessary for altering the steering angle in at least one predefined region is changed.

Furthermore the mobility scooter comprises a plurality of, preferably two, first wheels, wherein especially two first wheels are driven by one common drive unit, preferably via at least one gearbox or two first wheels are driven by independent drive units, and at least a single second wheel.

It is furthermore proposed that at least one first and at least one second wheel are formed by one wheel, especially acting simultaneously as a steerable wheel and a drive wheel, wherein preferably the passenger conveyance device comprises at least one third wheel, and/or in that the first wheel is a rear wheel and/or the second wheel is a front wheel with regard to a forward traveling direction of the device, wherein especially the passenger conveyance device comprises two rear wheels and one front wheel, or in that all first and second wheels are separate wheels.

In preferred embodiments it is proposed that the steering angle is changeable, especially by an occupant, via at least one steering device, like a handle bar, a joystick, a steering wheel, a steering bar and/or tracking ball and/or the second wheel and/or the steering device is connected to at least one steering spindle.

Furthermore a passenger conveyance device may be characterized by at least one mechanic transmission unit, via which a first steering signal of the steering device is mechanically transferable to the second wheel, wherein the mechanic transmission unit especially comprises at least a gearbox, a cam, an axle, a shaft, a tiller, a fork arrangement, a ball joint, the steering spindle and/or a mechanical link.

The invention furthermore proposes that the first steering signal is at least partly transferable to the second wheel in form of an electronic signal, especially an analog and/or a digital electronic signal, preferably via at least one switch, at least one potentiometer an/or at least one actuator, wherein the actuator is preferably mechanically connected to the mechanic transmission unit.

It is furthermore preferred that at least one, especially closed-loop, control device is connected to at least one steering force altering device, wherein the control device receives the first value and generates, especially further based on the first steering signal, a second steering signal that is transmitted to the steering force altering device.

In the before mentioned embodiment it is especially preferred that the steering force altering device mechanically alters a force necessary for a movement of the mechanic transmission unit, the second wheel and/or the steering device.

With the invention furthermore it is proposed that the mobility scooter may be characterized by at least one sensing device, wherein the first value is generated by the sensing device and/or the first value is a rotational speed of the first wheel, of the second wheel, of the third wheel and/or of the drive unit, a power supply value, especially a voltage value, a current value and/or a power value, of the drive unit, a speed of the mobility scooter relative to a surface, especially calculated based on GPS signals, a position of a speed actuator, especially an accelerator lever, an accelerator pedal, a gas pedal, a hand throttle and/or a throttle, and/or a signal provided by the speed actuator.

Furthermore it is preferred that the control device generates the second steering signal based on at least one lookup table and/or equation, wherein the relation between the first value and the force necessary for altering the steering angle, especially a force applied to the steering device when altering the steering angle, is stored in the lookup table and/or is expressed in the equation, especially as a function of stability turning characteristics, an attitude, a longitudinal and/or transversal inclination and/or a direction of travel or movement of the passenger conveyance device and/or a user capability, like an ability of movement, a grade of paralysis, a muscular strength and/or an age.

Furthermore it is preferred that the force necessary to alter the steering angle is mainly constant for a first value being smaller than a first set value and is increased for a first value being equal or greater than the first set value, wherein especially the force necessary to alter the steering angle is increased as a function of the first value, especially in progressive stages, linearly, exponentially, quadratically and/or logarithmically, wherein preferably the first set value is zero.

It also proposed with the invention that the force necessary to alter the steering angle is altered, especially increased, depending on the steering angle, preferably an absolute value of the steering angle, especially in progressive stages, linearly, exponentially, quadratically and/or logarithmically.

Advantageous embodiments may be characterized in that the steering force altering device comprises at least one first movable contact means and the mechanic transmission unit, the second wheel and/or the steering device comprises at least one second contact means, preferably drivingly connected to the mechanic transmission unit, the second wheel and/or the steering device, wherein a first contact surface of the first contact means may be brought in contact with a second contact surface of the second contact means, to increase a friction between the first contact means and the second contact means.

For the before mentioned embodiment it is especially preferred that the steering force altering device comprises at least one first spring device, wherein preferably the first contact means and/or the second contact means is/are spring biased fixed to a structure of the passenger conveyance device via the first spring device, wherein preferably the other of the first contact means and the second contact means is connected to the mechanic transmission unit, and/or in that the force is altered based on a profile of the first contact means and/or the second contact means, especially by a profile of the first contact means and/or the second contact means spanned in a plane by the normal directions of the first contact surface and/or the second contact surface in different areas, especially that respective first contact surfaces and/or second surfaces are positioned in different heights relative to the respective other contact means.

Furthermore it is proposed at least one actuating device for moving the first contact means relative to the second contact means and/or for moving the second contact means relative to the first contact means, wherein preferably the actuating device provides the movement based on a pneumatic, hydraulic, electromagnetic and/or mechanic working principle.

Preferred embodiments may be characterized in that the force to alter the steering angle is altered by changing a relative position of the first contact means and the second contact means, preferably the first contact surface and the second contact surface, especially via the actuating device, wherein preferably for a first value being lower than the first set value the first contact means and the second contact means are, especially spring biased, separated from each other and are in contact with each other, especially based on an electromagnetic force, for a first value being equal or greater than the first set value.

The before mentioned embodiment may be furthermore characterized in that the relative position is altered by moving the first contact means relative to the second contact means in a direction mainly perpendicular to a normal direction of the first contact surface and/or by moving the second contact means relative to the first contact means in a direction mainly perpendicular to a normal direction of the second contact surface.

It is also preferred, that preferably by the actuating device and/or the first spring device, the force to alter the steering angle is changed by changing a pressure force by which the first contact means contacts the second contact means, preferably by moving the first contact means in a direction being mainly parallel to a normal direction of the first contact surface and/or by moving the second contact means in a direction being mainly parallel to a normal direction of the second contact surface.

For this embodiment it is also proposed that the movement is transmitted via at least one biasing means, preferably a second spring device, to the first contact means and/or the second contact means.

Furthermore with the invention it is proposed that the first contact surface is aligned perpendicular and the second contact surface is aligned parallel to a first axis, especially a first rotational axis of the mechanic transmission unit and/or the steering device, wherein preferably the first contact means is moved parallel to the first axis by the actuating device and/or the second contact means is moved radially to the first axis by the actuating device, the first contact surface is aligned parallel and the second contact surface is aligned perpendicular to the first axis, wherein preferably the first contact means is moved radially to the first axis by the actuating device and/or the second contact means is moved parallel to the first axis by the actuating device, the first contact surface and the second contact surface are aligned parallel to the first axis, wherein preferably the first contact means and/or the second contact means is/are moved radially to the first axis by the actuating device, or the first contact surface and the second contact surface are aligned perpendicular to the first axis, wherein preferably the first contact means and/or the second contact means is/are moved parallel to the first axis by the actuating device.

A further development of the passenger conveyance device may be characterized in that at least two first contact surfaces and/or at least two second contact surfaces are forming a step or are continuously merging into each other.

Furthermore it is proposed that that the first contact means and/or the second contact means is/are symmetrical with respect to at least one symmetry plane.

A passenger conveyance device may be furthermore characterized by at least one speed limiting device, preferably connected to the control device, wherein by the speed limiting device the speed of the passenger conveyance device is limited to a second value in case the steering angle exceeds a predefined second steering angle, preferably based on a second signal generated by the control device.

Finally for this embodiment it is proposed that the speed limiting device actuates a brake, reduces the power supply to the drive unit, limits the speed of the first wheel, alters a position of and/or alters a signal provided and/or generated by a speed actuator, especially an accelerator lever, an accelerator pedal, a gas pedal, a hand throttle, and/or a throttle.

With regard to the method this object is achieved by a method of controlling a steering of a mobility scooter according to claim 1 comprising at least one first wheel acting as a drive wheel and at least one second wheel acting as a steerable wheel, wherein a steering angle of the second wheel is measured relative to a steering position of the second wheel corresponding to a forward or rearward traveling direction of the mobility scooter, wherein based on a first value representative for a speed of the mobility scooter, especially of the first wheel, a force necessary for altering the steering angle is changed.

The method may be further characterized in that, preferably by at least one, especially closed-loop, control device, especially connected to at least one steering force altering device, based on the first value, preferably in combination with a first steering signal, especially generated by a steering device, a second steering signal is generated, that is especially transmitted to a steering force altering device.

With the invention it is furthermore proposed that the first value is generated by at least one sensing device and/or the first value is a rotational speed of the first wheel, of the second wheel, of a third wheel and/or of a drive unit, a power supply value, especially a voltage value, a current value and/or a power value, of the drive unit, a speed of the passenger conveyance device relative to a surface, especially calculated based on GPS signals, a position of a speed actuator and/or a signal provided by the speed actuator.

This embodiment may be further characterized in that the second steering signal is generated based on at least one lookup table and/or equation, wherein the relation between the first value and the force necessary for altering the steering angle is stored in the lookup table and/or is expressed in the equation, especially as a function of stability turning characteristics an attitude, a longitudinal and/or transversal inclination and/or a direction of travel or movement of the passenger conveyance device and/or a user capability, like an ability of movement, a grade of paralysis, a muscular strength and/or an age.

With the invention it is furthermore proposed that the force necessary to alter the steering angle is mainly constant for a first value being smaller than a first set value and is increased for a first value being equal or greater than the first set value, wherein especially the force necessary to alter the steering angle is increased as a function of the first value, especially in progressive stages, linearly, exponentially, quadratically and/or logarithmically, wherein preferably the first set value is zero.

Finally the inventive method may be characterized in that the force necessary to alter the steering angle is altered, especially increased, depending on the steering angle, preferably an absolute value of the steering angle, especially in progressive stages, linearly, exponentially, quadratically and/or logarithmically.

Beside the altering of the steering force depending on the speed, an automatic reduction of the speed, especially in combination with a limiting of the steering angle depending on the speed, might be realized. For this purpose the inventive mobility scooter and/or method might include the following features.

In the passenger conveyance device the steering angle might be limited to a first steering angle based on the first value representative for a speed of the passenger conveyance device, especially of the first wheel, and/or in case the steering angle exceeds a predefined second steering angle the speed of the passenger conveyance device is limited to a second value.

The passenger conveyance device might further be characterized in that at least one, especially closed-loop, second control device is connected to at least one steering angle limiting device, wherein the second control device receives the first value and/or the first steering signal and generates a second steering signal that is transmitted to the steering angle limiting device.

For this embodiment it is proposed that the steering angle limiting device mechanically limits, especially based on the second steering signal, a movement, preferably a turning angle, of the mechanic transmission unit, the second wheel and/or the steering device to a range representative for the first steering angle.

In an alternative thereto it is proposed that the steering angle limiting device limits an electronic signal, especially the second steering signal, provided to the actuator to a range restricted to a value representative for the first steering angle, wherein preferably the steering angle limiting device is comprised by the control device.

The passenger conveyance device may be further characterized in that the control device receives the first steering signal, especially a first electronic signal representative for the first steering signal, wherein preferably further the second control device is connected to and/or comprises a speed limiting device and the second control device generates a second signal, especially transferred to the speed limiting device, limiting the speed of the passenger conveyance device to the second value.

It is further proposed that the speed limiting device actuates a brake, reduces the power supply to the drive unit, limits the speed of the first wheel, alters position of and/or alters a signal provided and/or generated by a speed actuator, especially an accelerator lever, an accelerator pedal, a gas pedal, a hand throttle, and/or a throttle.

Further it is preferred that the second control device generates the second steering signal and/or the second signal based on at least one lookup table and/or equation, wherein the relation between the first value and the first steering angle and/or the second steering angle and the second value is/are stored in the lookup table and/or is expressed in the equation, especially as a function of stability turning characteristics, a direction of travel or movement, an attitude and/or a longitudinal and/or transversal inclination of the passenger conveyance device, and/or an occupant capability, like an ability of movement, a grade of paralysis, a muscular strength and/or age.

It is furthermore proposed that the second steering angle is greater than zero and/or smaller than the first steering angle, and/or the absolute value of the first steering angle is limited irrespective of a direction of the first steering angle, or the first steering angle is limited to different absolute values depending on the direction of the first steering angle.

In advantageous embodiments it is proposed that the steering angle limiting device comprises at least one first movable locking means and the mechanic transmission unit comprises at least one second locking means, preferably drivingly connected to the mechanic transmission unit, the second wheel and/or the steering device, wherein a first contact surface of the first locking means may be brought in contact with a second contact surface of the second locking means, especially at the first steering angle.

In this embodiment it is preferred that the first locking means comprises a plurality of first contact surfaces and/or the second locking means comprises a plurality of second contact surfaces, wherein preferably the different first contact surfaces and/or second contact surfaces represent respective different first steering angles.

For this passenger conveyance device the invention further proposes that at least two first contact surfaces and/or at least two second contact surfaces are forming a step or are continuously merging into each other.

Furthermore it is preferred that the first locking means is movable, preferably into a longitudinal direction, whereby changing the first contact surface contactable by the second locking means or changing the second contact surface contactable by the first locking means in case the mechanic transmission unit is turned such that the second wheel is turned to the first steering angle.

This embodiment might further be characterized by at least one second actuating device for moving the first locking means, wherein preferably the second actuating device generates a longitudinal movement directly transmitted to the first locking means or the second actuating device generates a rotational movement being transferred into a, preferably longitudinal, movement of the first locking means.

In these embodiments it is preferred that the movement of the first locking means is in a direction mainly perpendicular to a rotational axis of the second locking means preferably in an radial direction of the rotational axis and/or the first locking means and/or the second locking means are symmetrical with respect to at least one symmetry plane.

The method might have the additional features that the steering angle is limited to a first steering angle based on the first value representative for a speed of the passenger conveyance device, especially of the first wheel, and/or that in case the steering angle exceeds a predefined second steering angle the speed of the passenger conveyance device is limited to a second value.

Further the method might be characterized in that the first value and/or the first steering angle is/are received by at least one, especially closed-loop, second control device connected to at least one steering angle limiting device and the second control device generates a second steering signal that is transmitted to the steering angle limiting device.

It is further proposed for the method that a movement, especially a turning angle of the mechanic transmission unit and/or the steering device, is mechanically limited by the steering angle limiting device to a range representative for the first steering angle or that an electronic signal, especially the second steering signal, provided to the actuator is limited, especially by the steering angle limiting device, to a range restricted to a value representative for the first steering angle.

Advantageous embodiments of the invention might comprise the feature that the first steering signal, especially a first electronic signal representative for the first steering signal, is/are received by the second control device, wherein preferably the second control device generates a second signal, especially transferred to a speed limiting device, connected to the control device, limiting the speed of the passenger conveyance device to the second value.

The claimed invention is thus based on the surprising finding that by changing a force necessary to alter a steering angle instabilities of the passenger conveyance device are avoided as depending on the speed a user will not exceed a predefined (stable) steering angle in normal situations as he will feel an increase in the force necessary to change, especially increase, the steering angle. However the user/occupant will be allowed, especially in emergency situations, to use the maximum possible steering angle, for example to go around an object. In other words a user is prevented from turning the steering easily and quickly at high speeds preventing an instability of the passenger conveyance device, especially a scooter, but however may use the maximum steering angle, with a higher force necessary, for example in emergency situations, wherein these higher forces may be provided by the user due to the ability to make a higher strength available in emergency situations.

This technical teaching might be combined but does not have to be combined with the following technical teaching according to the following preferred additional provisions.

Although not necessary, further to altering the force necessary for a change of the steering angle, especially simultaneously with restricting a steering angle to a first steering angle depending on the speed of the passenger conveyance device, by additionally reducing the speed of the passenger conveyance device, beside changing the necessary steering force, in case a second steering angle is exceeded, a person may still use a maximum possible steering angle in emergency situations. This is based on the technical finding that simultaneously with increasing a steering angle above the second steering angle also the speed is reduced and thus the force to alter the steering angle is reduced (and probably the first steering angle is increased so that a greater steering angle is allowed). Beside this easier changing to the maximum steering angle due to the slowing down of the personal conveyance device furthermore the drawbacks of only reducing a speed of the passenger conveyance device depending on the steering angle and of only restricting the steering angle depending on the speed are avoided. Especially the increased steering force and the steering angle maximum possible with a lower steering force at the respective speed ensures that the device may not become instable especially may not tip over and with decreasing speed also this maximum steering is choseable without an increased force.

In both cases, that means by the claimed technical teaching, independent whether it is combined with the preferred additional provisions, in comparison to generic passenger conveyance devices the stability is increased without reducing the ability to allow the best maneuverability in emergency situations or without decreasing the comfort of the passenger conveyance device.

Further the maximum allowable steering angle and/or the maximum necessary force to alter a steering angle may also be depending on a stability turning characteristic of the device, an attitude of the device, a longitudinal and/or transversal inclination of the device, a direction of travel or movement of the device and/or a user capability, like an ability of movement, a grade of paralysis, a muscular of strength and/or an age. Especially a sensor maybe used to measure these factors, especially an attitude and/or the inclination of the passenger conveyance device.

To alter a force necessary to change a steering angle to not prevent a user from turning away from danger, for example from an obstacle in an emergency situation, different systems, especially steering angle force altering devices, might be used.

The device for altering the force may comprise an actuating device and an actuated driven pad, for example comprising rubber, forming a first contact means that is at low speeds not in contact with a second contact means connected to the mechanic transmission unit. At high speeds the actuating device moves the first contact means closer to the second contact means. When the steering is turned the second contact means rotates with the mechanical transmission unit.

The second contact means might alternatively or additionally to the use of a actuating device be thicker at its ends, that means the first and second contact means might be closer to each other or might have a higher contact force in case the first contact means is positioned in the area of the ends of the second contacts means or contacts the second contact means in the area of the ends. A first contact surface of the first contact means will than rub on the second contact means more and more as the steering is turned to a greater angle. This results in resistant preventing the user from turning the steering easily and quickly at high speed, additionally preventing instability of the personal conveyance device.

The amount of resistants might be controlled by the shape of the first contact means and/or the second contact means, the first contact surface of the first contact means and/or the second contact surface of the second contact means, a pressure and/or movement provided by the second actuating device and/or the material of the first and/or second contact means. Also a spring device between the first contact means and the actuating device might be possible or the actuating device might be formed by a spring, especially in case of a shaping of the first or second contact means as described above.

In the respective embodiments different orientations of the first and second contact means, especially the first and second contact surfaces relative to each other, might be realized.

Also it might be possible that the actuating device does not provide a movement in a direction that is parallel to a normal direction of a contact surface but this movement might be provided by the above mentioned spring device. By the actuating device it is then secured that at low speeds the first and second contact means are not in contact with each other independent on the steering angle as the first or second contact means is moved away from the other contact means by the actuating device, especially by a movement perpendicular to the normal direction of the contact surfaces of the contact means, especially such that the first contact surface and the second contact surface do not fall in line with each other. At high speeds the actuating device moves the first or second contact means to fall in line with each other. When the steering is then turned the first or second contact means again retains with the steering.

As described above the movement of the steering results in a resistant preventing the user from turning the steering easily/quickly at high speed and thus preventing an instability of the personal conveyance device. At least the user gets a feedback that he is now entering a steering angle range that might lead to instabilities as the force is increasing.

The optional additional limiting of the steering angle might be realized in different ways, especially depending on a steering mechanism realized in the device. Generally the passenger conveyance device comprises a second control device being especially identical to the control device for altering the force for changing the steering angle that monitors a first value, especially the passenger conveyance device's speed or an adequate value provided by a first sensing device, especially a scooter's speed, and controls the allowable steering angle correspondingly.

The second control device is programmed (tuned) to suit the driving characteristics of the passenger conveyance so that it only allows the user to input via a steering device a limited first steering angle for a given speed or sets the steering angle of the second (steerable) wheel to be not greater than the first steering angle, hence not allowing the passenger conveyance device to become instable due to an attempted turn at a speed that is too excessive to enable it to be accomplished.

By this method further the steering angle at lower speeds is not limited, hence the maneuverability characteristics of the passenger conveyance device are not reduced, especially , when small steering corrections are made the passenger conveyance device is not slowed down.

Anyhow also when using this restriction of the steering angle still a maximum steering angle in emergency situations is possible. During this restriction also a reducing of the speed is guaranteed when the steering angle is increased above a second steering angle. This reducing of speed might be combined with the altering of the steering force with or without the limiting of the steering angle as described above. Especially only a reducing of the speed for higher steering angles might be combined with the altering of the steering force without limiting the steering angle might be realized.

Further the control device or the second control device optionally detects for this reduction of the speed that the passenger conveyance device is traveling at high speed and also detects that a steering angle might demanded greater than the stability allows as the steering angle exceeds a predefined second steering angle and therefore slows the passenger conveyance device down that in turn allows a greater (first) steering angle to be used, especially with lower steering forces.

In a first embodiment a mechanical steering connection is used in the passenger conveyance device. That means that a first steering signal given by user via as steering device is fully mechanically transmitted to a steerable (second) wheel of the passenger conveyance device. This connection is especially established via a mechanical transmission unit. In this embodiment the passenger conveyance device comprises a sensing device for either sensing the passenger conveyance device speed or to estimate the scooter speed, for example based on power supplied to an electromotor of the passenger conveyance device.

The speed data provided by the sensing device in form of a first value and optionally the data provided by the steering device in form of a first steering signal is processed by the control device and/or the second control device and optionally transferred into a second steering signal that is than transmitted to a steering angle limiting device. This transfer preferably is carried out by a comparison against a pre-determined set of data to control the steering angle limiting. The pre-determined set of data being, especially inter alias, determined from the passenger conveyance device stability turning characteristics. Alternatively the characteristics can be programmed and adjusted to suit both the passenger conveyance device characteristics, environment where the passenger conveyance device is being used and the user's capabilities.

The steering angle limiting device limits the permissible steering angle to a range representative of the first steering angle. The steering angle limiter could be one of the following but not limited to:
An adjustable steering stop that interacts with the mechanic transmission unit, especially a steering spindle. The steering stop comprises a first locking means interacting with a second locking means connected to the mechanic transmission unit. Different areas of the first locking means and/or the steering stop come into contact with the second locking means, for example a protrusion from the steering spindle, at different passenger conveyance device speeds as commanded and/or moved by the steering angle limiting device. The shape, size, form and amount of movement of the first locking means and/or steering stop are determined to suit the passenger conveyance device characteristics, environment where the passenger conveyance device is being used and the user's capabilities. The movement of the steering stop may be achieved in different ways. Especially the first locking means is moved by an electromechanic, magnetomechanic hydraulic, and/or pneumatic actuating device. For example this actuating device might use the Eddy-current effect.

For example a body, possibly a plate or disc being comprised by the first locking means, might be used. The body, forming the first locking means, comes into contact with a second locking means, e.g. in form of a protrusion from the steering spindle, at different speeds as commanded by the steering angle limiting device.

In a further development or alternative different areas in form of second contact surfaces of the second locking means, being especially a tapered or stepped locking means, come into contact with a body being part of the first locking means, especially a first contact surface of the first locking means, whose relative position to the second locking means is commanded by the steering angle limiting device at different speeds.

In an additional or alternative embodiment the shaped body of the first locking means has different areas in form of different first contact surfaces, comprised especially by a stepped or tapered body. These different areas of the body whose relative position commanded by the steering angle limiting device at different scooter speeds come into contact with the second locking means, especially a second contact surface of the second contact means. The shape, size, form and amount of movement of the first locking means and/or the second means locking are determined to suit the passenger conveyance device characteristics, environment where the passenger conveyance device is being used and the user's capabilities.

It might also be possible to realize the steering angle limiting device in a fully mechanical way. For example the passenger conveyance device might comprise a device that translates mechanical rotation movement due to the passenger conveyance device's speed, especially a scooter speed, into a steering angle limitation. The device uses the variation in torque or speed or force generated by centrifugal force generated by the scooters speed to mechanically vary the steering angle limiting. In other words the actuating device might be an (fully) mechanic actuating device.

A speed translator forming a part of this mechanic actuating device could use a rotational mass generated forces to generate rotational or linear movement.

A stepped plate comprised or formed by the first locking means might be used to interact with the second locking means, especially connected to the steering spindle. Different areas of the stepped plate might come, for example, into contact with a protrusion from the steering spindle at different speeds as determined by the speed translator. The shape, size, form and amount of movement of the steeped plate are determined to suit the passenger conveyance device characteristics, environment where the passenger conveyance device is being used and the user's capabilities. The movement of the stepped plate may be achieved in different ways, possibly using linear movement from the translator and by rotational movement from the translator.

Also with the mechanic actuating device the first locking means and the second locking means might have the characteristics regarding their outer form described before.

Independent of the way of function of the actuating device rotational or longitudinal movements of the actuating device might be transferred into longitudinal or rotational movements of the first locking means.

In other embodiments the first steering signal provided by the user via the steering device is at least partly transmitted to a steerable wheel in form of an electronic signal. Especially the steering device provides a first steering signal that is transmitted to the (second) control device in a mechanic, hydraulic, pneumatic and/or electronic form and depending on the first steering signal as well as the first value the (second) control device produces a second (electronic) steering signal that is transmitted to an actuator that then moves the steerable wheel, especially directly or via the mechanic transmission unit. In these embodiments a mechanic steering limiting device may be avoided and the restriction of the steering angle might be realized in a fully electronic way. Especially also when limiting the steering angle in electronic way the passenger conveyance device comprises a sensing device for either sensing the passenger conveyance device speed or to estimate the scooter speed based on power supplied to the motor and that produces an electronic signal.

The actuator that is controlled by the (second) control device turns the steerable wheel of the passenger conveyance device. The actuator could be one of the following but not limited to.

The actuator might comprise or might be formed by a linear actuator connected to a protrusion from the mechanic transmission unit, especially a steering spindle that imparts linear motion that is translated into rotary motion of the steering spindle. The amount of rotational angular movement of the spindle being created is determined by the amount of linear movement of the actuator and is controlled by the steering angle limiting device.

Alternative or additionally a rotary actuator might be used, acting on the mechanic transmission unit, preferably a steering spindle that imparts rotary motion that is translated in to rotary motion of the steering spindle via a gear train, belt drive or friction drive. The amount of rotational angular movement of the spindle being created is determined by the amount of rotational movement of the actuator and is controlled by the steering angle limiting device.

In the before described embodiments the speed data in form of the first value and the user occupant input via the steering device, especially a steering wheel, handle, bar or similar device, is processed by the (second) control device in comparison against a pre-determined set of data to control the steering angle limiting device. The pre-determined set of data being determined from the passenger conveyance device stability turning characteristics. Alternatively the characteristics can be programmed and adjusted to suit both the passenger conveyance device characteristics, environment where the passenger conveyance device is being used and the user's capabilities. The (second) control device compares the current speed and demanded turning angle and provides a suitable steerable wheel angle in form of a second steering signal taking into account the maximum permissible steering angle for the current passenger conveyance device speed and attitude.

Although in the aforementioned embodiments a control of the steering angle was described by limiting a movement of a spindle also other elements of a mechanic transmission unit maybe used for such a limiting, for example a gearbox, a cam, an axle, a shaft, a tiller, a fork arrangement, ball joint and/or any other mechanical link.

To also optionally reduce the speed of the personal conveyance device depending on the steering angle, especially the second steering angle, different solutions might be used however all including that a first value is provided and transferred to the control device or the second control device such that the (second) control device may alter the speed of the personal conveyance device via a speed limiting device that for example actuates a break, reduces a power supplied to the drive unit, limits the speed of the drive wheel or other functions.

Further advantages and features of the invention are presented in the following description in which preferred embodiments are shown by the help of the enclosed figures, in which
- Figure 1: is a schematic view onto a passenger conveyance device with a steering force altering device according to a first embodiment of the invention;
- Figurers 2a to 2c: are schematic perspective views onto the steering force altering device of figure 1 according to a cutaway B in figure 1 seen from the direction C1 in figure 1;
- Figures 3a to 3c: are schematic views onto the steering force altering device of figures 1 and 2a to 2c in a direction C2 in figure 1 in three different positions;
- Figures 3d to 3f: are schematic views comparable to the views shown in figures 2a to 2c but onto an alternative steering force altering device of figure 1;
- Figures 3g and 3h: are schematic views comparable to the views in figures 3a to 3c but onto the steering force altering device of figures 3e and 3f;
- Figure 4: is a schematic view onto a passenger conveyance device with a steering force altering device according to a second embodiment of the invention;
- Figures 5a to 5c: are schematic drawings showing a perspective view onto the steering force altering device of the passenger conveyance device of figure 4 in three different positions;

- Figure 6: is schematic view onto a passenger conveyance device with a steering force altering device according to a third embodiment of the invention in a first position;
- Figure 7: is a schematic view onto the steering force altering device of figure 7 in a cutaway view according cutaway E in figure 7 in a second position; and
- Figures 8a and 8b: are schematic perspective views onto the steering force altering device of figures 6 in a direction F in figure 6.
- Figure 9: is a schematic drawing showing different components of a passenger conveyance device according to a first embodiment;
- Figure 10: is a schematic drawing showing different components of a passenger conveyance device according to a second embodiment;
- Figures 11a to 11c: are schematic drawings showing a steering angle limiting device according to a first embodiment in three different positions;
- Figure 12: is a schematic drawing showing a steering angle limiting device according to a second embodiment;
- Figures 13a to 13c: are schematic drawings showing a steering angle limiting device according to a third embodiment in three different positions;
- Figures 14a to 14c: are schematic drawings showing steering angle limiting device according to a fourth embodiment of the invention in three different positions;
- Figures 15a to 15c: are schematic drawings showing a steering angle limiting device according to a fifth embodiment in three different positions;
- Figures 16a to 16c: are schematic drawings showing a steering angle limiting device according to a sixth embodiment in three different positions;

- Figure 16d: is a schematic drawing showing a perspective view onto the steering angle limiting device according to figures 16a to figures 16c in a direction A in figure 16a;

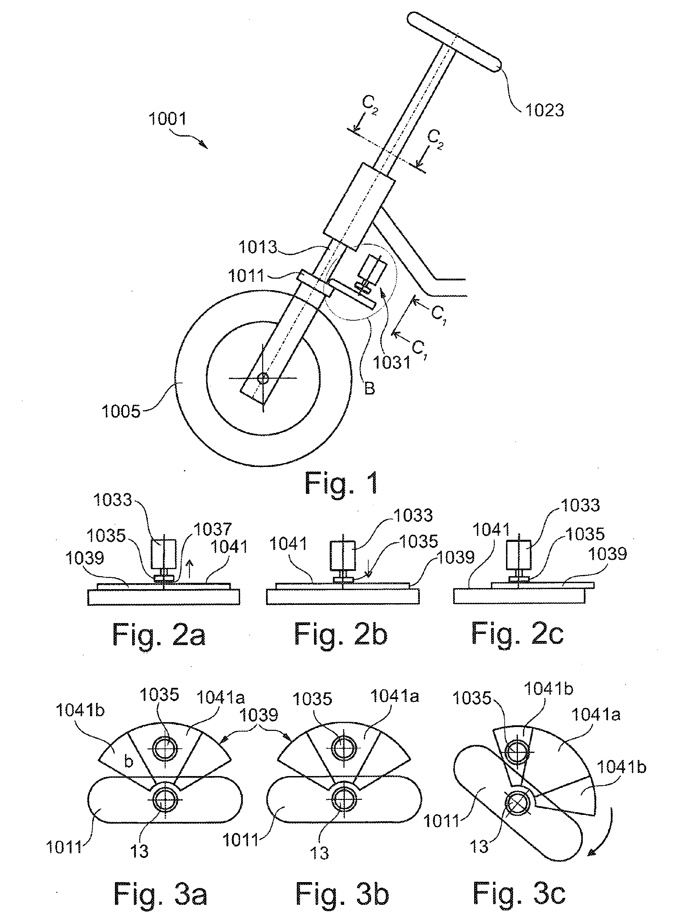

In figure 1 a perspective view onto a part of a first embodiment of a passenger conveyance device according to the invention in form of a scooter 1001 is shown. The scooter 1001 comprises a not shown drivable wheel driven by an also not shown drive unit, a steerable wheel 1005 connected via a mechanical transmission unit comprising a fork 1011 and a spindle 1013 to a steering device in form of a steering wheel 1023. The scooter 1001 comprises a steering force altering device 1031 which is connected to a not shown control device. Depending on a first value, representing a speed of the scooter, the control device changes with the help of the steering force altering device 1031, a force necessary to change a steering angle of the wheel 1005.

In figures 2a to 2c the steering force altering device 1031 is shown in different positions, based on a cutaway B in the direction C1 of figure 1. In figure 2a the steering force altering device 1031 is shown in a position in which the scooter is traveling at a low-speed, especially a speed lower than a first set value. As can be taken from figure 2a the steering force altering device 1031 comprises an actuating device 1033 being connected to a first contact means 1035 having a first contact surface 1037 at least partly comprising a rubber material.

Connected to the spindle 1013 is a second contact means 1039. In case, the speed of the scooter 1001 is increased , especially above the first set value, the first contact means 1035, more precisely the first contact surface 1037, is brought into contact with the second contact means 1039, more precisely with a second contact surface 1041 of the second contact means 1039. Due to the contact of the first contact means 1035 and the second contact means 1039 a frictional resistance is generated such that a higher force is necessary to move the second contact means 1039 relative to the first contact means 1035 and thus the steering device 1023 as well as the steerable wheel 1005.

Furthermore, the second contact means has such a second surface that for increasing steering angles the pressure force between the first and second contact means is increased and thus the frictional force is increased.

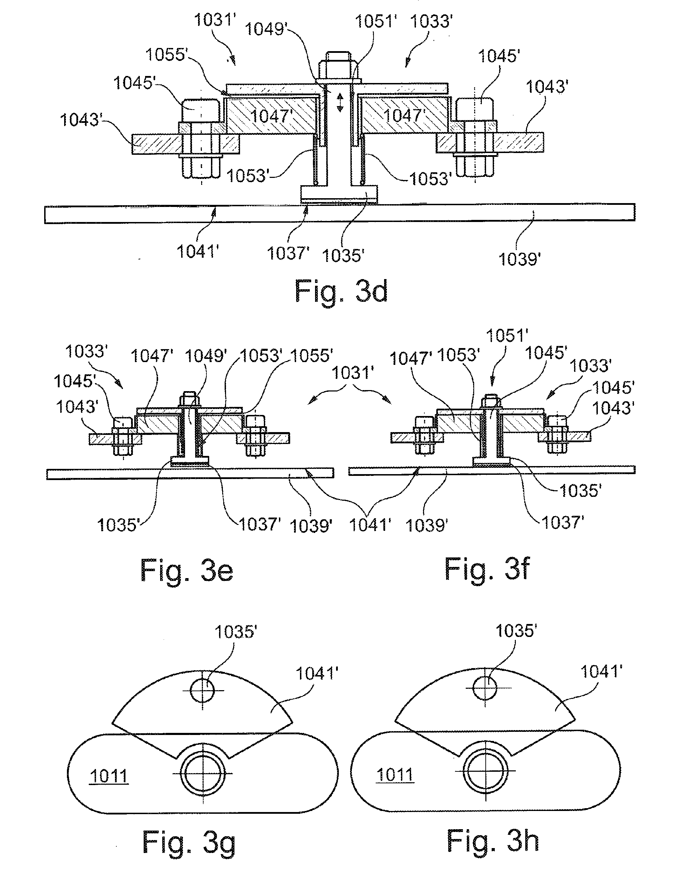

As can be taken from figures 3a to 3c the second contact means 1039 has a profile in a plane spanned by the normal directions of the different areas of the first contact surface or the second contact surface that the thickness is increased into the direction of the first contact means at its end, especially the second contact means comprises at least two contact surfaces 1041 a and 1041b.

By the steering force altering device, depending on the speed of the scooter 1001, the force necessary to rotate or to move the steering device 1023 and the steerable wheel 1005 is increased from the position shown figures 2a and 3a to the position shown in figures 2b and 3b as the first contact means 1035 is brought into contact with the second contact means 1039. Furthermore, at such higher speeds the force necessary to move the steerable wheel 1005 is furthermore increased for higher absolute values of the steering angle, as can be taken from the position of the steering force altering device shown in figures 2c and 3c. At higher steering angles the first contact means 1035, namely the first contact surface 1037 of the same, does not contact anymore the second contact means in the area of the second contact surface 1041a but in the area of the (higher) second contact surface 1041b. Due to the higher pressures forces based on the profile of the second contact means the frictional forces are also higher.

In other embodiments the pressure forces between the first contact surface and the second contact surface might not be influenced by a profile of the contact surfaces but might be controlled and/or altered solely by the pressure force build up by the actuating device.

Such an alternative embodiment is for example shown in figures 3d to 3h.

In figure 3d a cross sectional view onto a different steering force altering device 1031' is shown. The elements of the steering force altering device 1031', which correspond to the elements of the steering force altering device 1031 have the same reference number, however with one apostrophe. The main difference to the steering force altering device 1031 is that further details of the actuating device 1033' are shown and that the profile of the second contact means 1039', especially the form of the second contact surface 1041', is flat.

In this steering force altering device 1031' the steering force is mainly altered by the pressure force by which the first contact means 1035', especially the first contact surface 1037', is pressed onto the second contact means 1039', especially the second contact surface 1041'. The actuating device 1033' is mechanically connected to a mount 1043' via screws 1045' including a little compliance. A coil 1047' is fixed to the mount 1043'. A core 1049' being connected to the first contact means 1035' is located within a coil opening 1051' of coil 1047'. Via a spring 1053' the core 1049' and thus the first contact means 1035' is forced away from the second contact means 1041'. Thus in the not energized situation of coil 1047', especially at low speeds of the scooter 1001, the spring 1053' keeps the contact surfaces 1037' and 1041' separated from each other. This position is shown in figure 3d. At higher speeds of the scooter 1001 the coil 1047' is energized and thus a gap 1055' is closed resulting in a movement of the core 1049' and thus the first contact means 1035' in the direction to the second contact means 1039'. This causes the two contact surfaces 1037' and 1041' to touch each other and hence increases the steering force. Especially in the situation when the contact surfaces 1037' and 1041' touch each other the connection of the actuating device 1033' to the mount 1043' via the screws 1045' allows by the little compliance small steering movements without increased force. In other words the actuating device 1033' is mounted in such away that allows to move a small amount and thus will allow a user to turn a steering by comparable small angles without feeling a resistance.

In figure 3e the steering force altering device 1031' is shown in a position in which the steering force is minimized. In figure 3f the situation is shown in which the core 1047' is energized and thus the first contact means 1035' is pressed onto the contact means 1039'. As can be seen from figures 3e to 3h, in comparison to the embodiment shown in figures 2a to 3c, the second contact means 1039', especially the second contact surface 1041' has a flat profile. That means in the steering force altering device 1031' a steering force as solely altered by the force generated by the actuating device 1033'. For greater steering angles a current flowing trough the coil 1047' is increased and thus a pressure force by which the core 1049' is forced into the direction of the second contact means 1039' is increased.

Of course the steering force altering device 1031' might be further adapted such that the second contact means 1039' has a profile comparable to the second contact means 1039 shown in figures 2a to 3c. Especially the actuating device 1033' might only be used to bring the first and second contact means into contact which each other, whereas the steering force is increased for greater steering angles based on the profile of the second contact means, especially the second contact surface.

Furthermore the actuating device 1033' might be amended such that beside coils additional levers are used to transmit a movement of the core 1049' to the first contact means 1035' to use respective mechanical advantages to reduce the movement of the first contact means but simultaneously increase the force that might be build up by the actuating device 1033'.

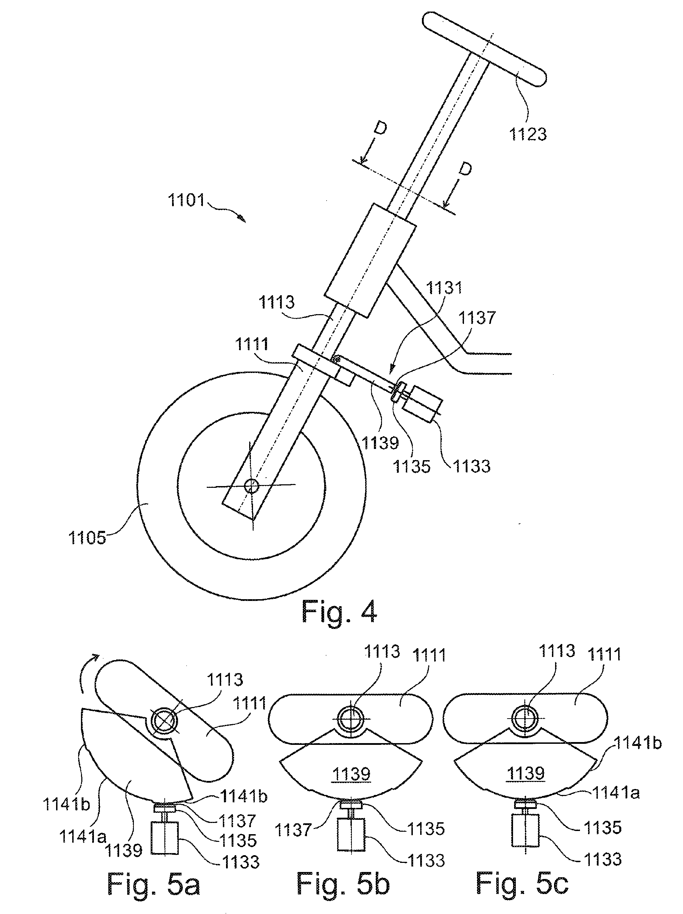

In the embodiment shown in figures 1 to 3h a movement of the first contact means via the actuating devices 1033 , 1033' is generated along a direction being parallel to a rotational axis of the spindle and/or the second contact means. In figures 4 to 5c an alternative embodiment in form of a scooter 1101 is shown. Elements of the scooter 1101 being corresponding to scooter 1001 have the same reference signs, anyhow increased by 100. In comparison to the scooter 1001 the steering force altering device 1131 of the scooter 1101 is located such that a movement of the first contact means 1135 is generated in a direction perpendicular to a rotational axis of the spindle 1113 and thus the second contact means 1139. Again by moving the first contact means 1135 via the actuation device 1133, a pressure force and thus a frictional force between the first and second contact means 1135, 1139 is increased depending on a speed of the scooter 1101. Furthermore, by a profile of the second contact means 1139, especially respective second contact surfaces 1141a, 1141b of the second contact means 1139, with increasing steering angles the frictional force is also increased. Again the shape of the second contact means is a plane spanned by the normal directions of the respective regions of the second contact means such that at the ends of the second contact means the contact surfaces are highered in a direction to the first contact means.

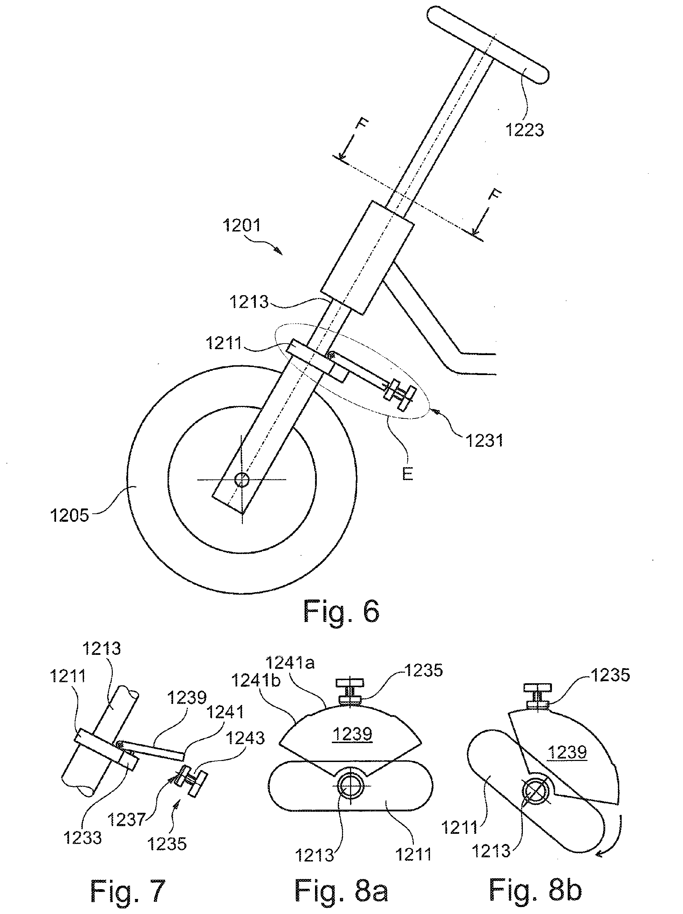

In figures 6 to 8b another scooter 1201 having a third embodiment of a steering force altering device 1231 is shown. Elements of the scooter 1201 corresponding to elements of scooter 1001 have the same reference signs, anyhow increased by 200. In comparison to the embodiments shown in figures 1 to 5c, the steering force altering device 1231 of scooter 1201 comprises an actuating device 1233 that is actuating the second contact means 1239 whereas the first contact means 1235 is biased by a spring device 1243. In a position, shown in figure 6, the first and second contact means 1235, 1239 are in line with each other and thus due to the profile form of the second contact means 1239 the force necessary to alter a steering angle, is increased to the ends of the contact means 1239 and thus to higher steering angles. In case the scooter 1201 is traveling at lower speeds via the actuating device 1233 not the first 1235 but the second contact means 1239 is moved, however in a direction perpendicular to a normal direction of the contact surface 1237 of the first contact means 1235. By this movement, as shown in figure 7, the first and second contact means (1235, 1239) are not anymore in line with each other and thus the steering force necessary to move the steerable wheel 1205 is minimized.

In figures 8a and 8b the steering force altering device 1231 is shown in a position as shown in figure 6, when the scooter 1201 is traveling with a speed being higher than a predefined first set value. Depending on the steering angle a frictional force is increased for higher steering angles. But when the relative position of the first and second contact means is changed for an increasing steering angle a force necessary to change the steering angle is increased due to the profile of the second contact means.

In a preferred embodiment the control device not only alters the steering force, but also reduces, as described in the following with reference to scooters 1 and 101, the speed in case a steering angle is increased over a second value. In this way the speed of the scooter is reduced and due to the reduction of the speed, also the force necessary for altering the steering angle is decreased easing a steering of the scooter and thus easing a turn around an obstacle in case of an emergency situation.

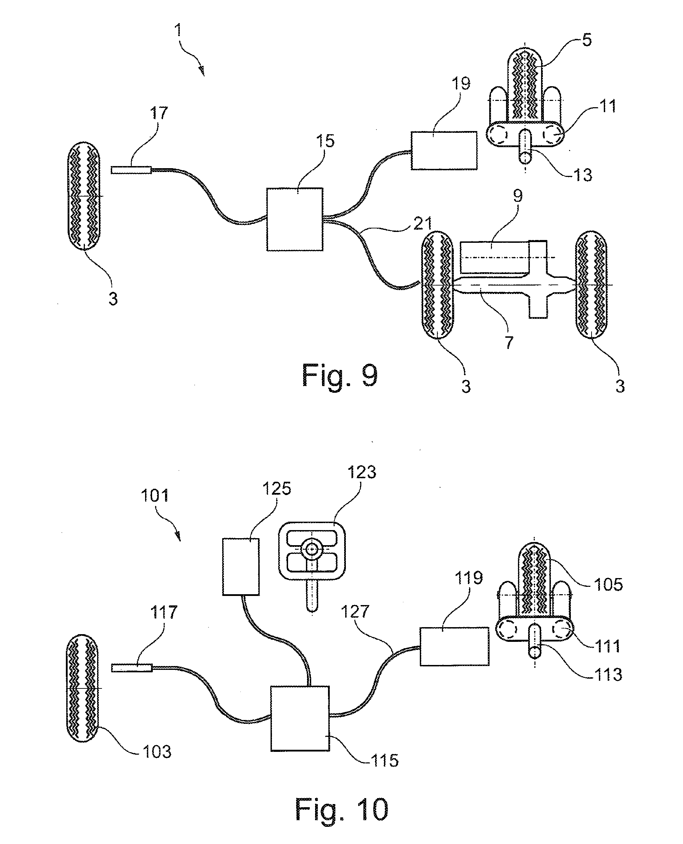

Figure 9 shows a schematic view onto different components of a passenger conveyance device in form of a scooter 1 according to an optional embodiment allowing further a limiting of the steering angle depending on the speed in combination with the decreasing of the speed depending on the steering angle. The scooter 1 comprises two first wheels 3 acting as drive wheels and a second wheel 5 acting as a steerable wheel. The first wheels 3 are connected via a gear box 7 to a drive unit in form of an electromotor 9. The second wheel 5 is connected to a mechanic transmission unit from which a fork 11 and a spindle 13 are shown. In figure 9, to ease the understanding, one of the first wheels 3 is shown separately to allow to explain that a second control device 15, that is especially identical to the control device for altering the steering force, is connected to a sensing device 17 to measure a speed of the scooter 1 to provide a first value to the second control device 15. In an alternative embodiment the sensing device 17 maybe configured to measure a speed of the second wheel 5. The first value provided to the second control device 15 is used, as explained later, to restrict a steering angle of the second wheel 5 to a predefined first steering angle being defined based on the first value, with the help of a steering angle limiting device 19 and preferably also to alter the steering force. The second control device is also used to control the drive unit 9 via a connection 21, especially to reduce a speed of the scooter 1 depending on a steering angle set by a occupant or user of the scooter 1 via a steering device, not shown in figure 9, in case the steering angle exceeds a predefined second steering angle. Thus in the second scooter 1 the control device 15 also comprises the speed limiting device that alters a signal provided to the drive unit 9 to change, especially reduce the speed of the scooter 1.

In the embodiment shown in figure 9 the steerable wheel 5 is mechanically connected to the steering device.

In figure 10 a further embodiment in form of a scooter 101 is shown. Elements of the scooter 101 complying with elements of the scooter 1 shown in figure 9 are having the same reference signs however increased by the factor 100. Also the scooter 101 is driven by a not shown drive unit to drive the wheels 103 and being connected to the second control device 115. In figure 10 furthermore a steering device in form of a steering wheel 123 is shown. A position of the steering wheel 123 is sensed via a reading device 125 providing a first steering signal for the second control device 115. The second control device 115 is furthermore connected to a not shown actuator to actuate the mechanic transmission unit, especially the spindle 113 and/ore the fork 111. For this propose the second control device 115 generates a second steering signal that is provided to this actuator. The actuator is especially comprised by the steering angle limiting device 119 and the second steering angle is fed to the actuator via a connection 127.

Thus the scooter 1 comprises a mechanic steering mechanism as signals from the steering device are (fully) mechanically transferred from the steering device to the steerable wheel 5 via the mechanical transmission unit. The scooter 101 comprises however a steering system in which the first steering signal is at least partly transferred in electronic form to the steerable wheel 105.

In both cases via the second control device 115,15, depending on a speed of the scooter 1, 101, a steering angle of the wheel 5, 105 is limited to a predefined first steering angle. In the scooter 1 this is realized by the steering angle limiting device 19 providing mechanical limiting of the movement of the wheel 5 and/or the mechanical transmission unit. In scooter 101 the steering angle limiting device adapts the first steering signal such that an actuator turns the wheel 105 only in a predefined range.

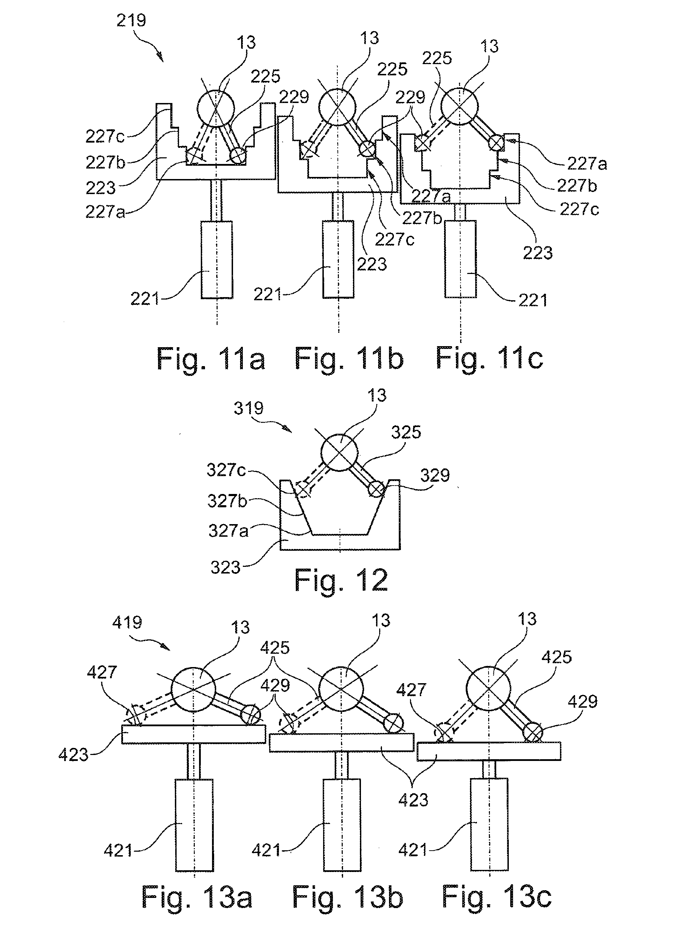

In the following with the help of figures 11 a to 16d different embodiments of a steering angle limiting device that are useable as a steering angle limiting device 19, 119 are shown.

In figures 11 a to figure 11c different positions of a steering angle limiting device 219 are shown. As can be seen from figure 11 a the steering angle limiting device comprises a second actuating device 221 being connected to a first locking means 223. A spindle 13 is connected to a second locking means 225. The first locking means 223 comprises first contact surfaces 227a, 227b, 227c. The second locking means 225 comprises a second contact surface 229.

Depending on the second steering signal provided by the second control device the second actuating device 221 changes the position of the first locking means. Depending on the position of the first locking means 223 the second locking means 225, more precisely the second contact surface 229, comes into contact with the respective contact surfaces 227a (figure 11a), 227b (figure 11b) or 227c (figure 11c) in the respective steering positions of the spindle 13 and the locking means 225 shown in continues and broken lines respectively. The position of the contact surfaces 227a, 227b and 227c allows a more or less restricted range of movement for the second locking means 225 between these two shown positions and thus of the spindle 13. In figure 11c the range of movement is maximized whereas with a higher speed of the scooter the range of movement is reduced as shown in figure 11b and at higher speeds the movement of the spindle 13 and thus the steering range of the scooter is reduced to a minimum range as shown in figure 11a.

Although the contact surfaces of the steering angle limiting device 219 are arranged in a stepwise manner an alternative embodiment shown in figure 12 is explained with the help of a steering limiting device 319. Elements of the device 319 being corresponding to elements of device 219 have the same reference signs but increased by 100. The different surfaces may be connected in a continuous manner in form of contact surfaces 327a, 327b and 327c.

In figures 13a to 13c a third embodiment of a steering angle limiting device 419 is shown in different positions. Elements of the device 419 being corresponding to elements of the device 219 have the same reference signs but increased by 200. In figure 13a a minimized steering range between the positions of the locking means 425 shown in broken and in continuous lines (movement counterclockwise from the position shown in continuous lines to position shown in broken lines) is possible due to the position of the first locking means 423 relative to the second locking means 425. In this embodiment the rotational movement of the spindle is transmitted via a gear reduction to the steerable wheel. This range of movement is increased in the second position shown in figure 11b and maximized in the position shown in figure 11c.

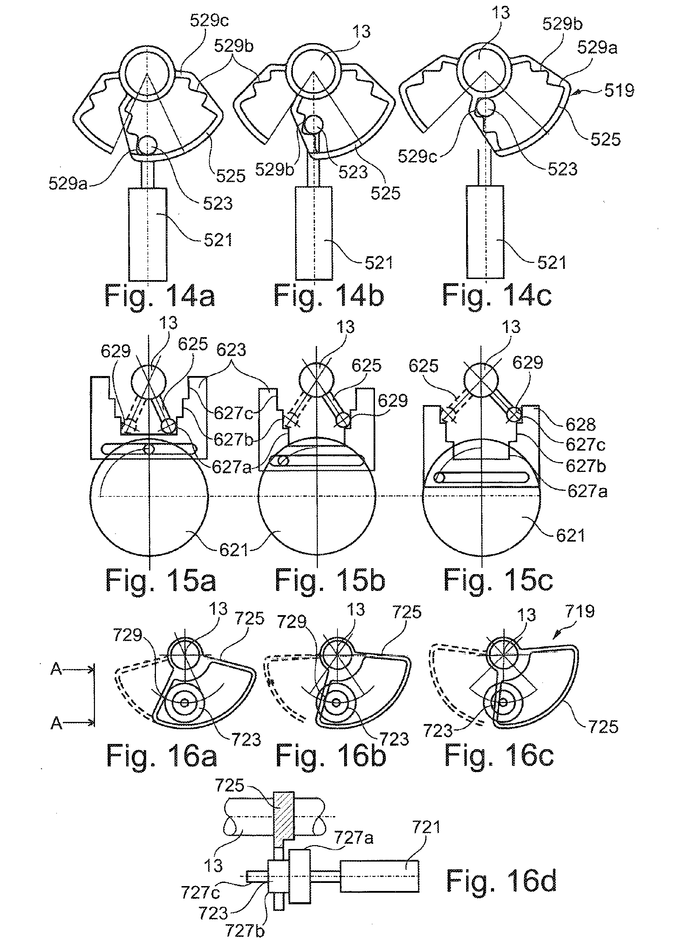

In figures 14a to 14c a fourth embodiment of a steering angle limiting device 519 is shown. Elements of the device 519 being corresponding to elements of device 219 have the same reference signs but increased by 300. The steering angle limiting device 519 differs from the steering angle limiting devices 219, 319 mainly with regard to a form of the first locking means 523 and the second locking means 525. In comparison to the embodiments shown in figures 11a to 13c in which the first locking means provides respective different contact surfaces in the embodiment shown in figures 14a to 14c the first locking means 523 provides mainly one contact surface 527, whereas the second locking means provides respective contact surfaces 529a, 529b and 529c. However, depending on the position of the first locking means 523, controlled by the second actuating device 521, a range of movement between the positions shown in broken and continous lines of the second locking means and thus of a spindle 13 is changed. At high speeds of the scooter the steering angle limiting device 519 is in the position shown in figures 14a restricting the possible steering angle to a minimum value, whereas in figure 14c the scooter speed is so low that the maximum possible steering angle range is allowed.

In the embodiments shown in the figures 11a to 14c, the second actuating devices 221, 421 and 521 provide a longitudinal movement that is transferred into a longitudinal movement of the first locking means. Alternatives to this are possible.

Such an alternative is shown in figures 15a to 15c in which a fifth embodiment of a steering angle limiting device 619 is shown. Again elements of device 619 being corresponding to elements of device 219 have the same reference signs, anyhow increased by 400. The second actuating device 621 provides a rotational movement which is transferred into a longitudinal movement of a first locking means 623 being comparable to the first locking means 223 of the steering angle limiting device 219.

Also a movement of the first locking means is not restricted to a movement in a direction being radial to an axis of spindle 13. This movement can also be in a direction parallel to the spindle axis, for example in case the radial space around the spindle 13 is restricted. Such an embodiment in form of an steering angle limiting device 719 (elements of device 719 corresponding to elements of device 219 have the same reference signs, anyhow increased by 500) is shown in figures 16a to 16d. In figures 16a to 16c different positions of a first locking means 723 relative to a second locking means 725 are shown. In figure 16d a view onto the steering angle limiting device 719 in a direction A is shown. As can be taken from figure 16d the second actuating device 721 moves the first locking means 723 in a direction parallel to an axis of the spindle 13. The first locking means has a stepped conus shape providing respective contact surfaces 727c, 727b and 727a for the second locking means 725. Depending on the position of the first locking means 723 the movement of the spindle and thus the steerable wheel is more or less restricted.

**Reference signs**
- 1: scooter
- 3: wheel
- 5: wheel
- 7: gearbox
- 9: electromotor
- 11: fork
- 13: spindle
- 15: control device
- 17: sensing device
- 19: steering angle limiting device
- 21: connection
- 101: scooter
- 103: wheel
- 105: wheel
- 111: fork
- 113: spindle
- 115: control device
- 117: sensing device

- 119: steering angle limiting device
- 123: steering wheel
- 125: reading device
- 127: connection
- 219,319,419,519,619,719: steering angle limiting device
- 221, 421, 521, 621, 721: actuating device
- 223, 323, 423, 523, 623, 723: locking means
- 225, 325, 425, 525, 625, 725: locking means
- 227a, 227b 227c, 327a, 327b, 327c, 427,:
- 527, 627a, 627b, 627c, 727a,727b, 727c: contact surface
- 229, 329, 429, 529a, 529b, 529c, 629, 729: contact surface
- A, C1, C2, D, F: direction
- B, E: cutaway
- 1001, 1101, 1201: scooter
- 1005, 1105, 1205: wheel
- 1011,1111,1211: fork
- 1013, 1113, 1213: spindle

- 1023, 1123, 1223: steering wheel
- 1031, 1031', 1131, 1231: steering force altering device
- 1033, 1033', 1133, 1233: actuating device
- 1035, 1035', 1135, 1235: contact means
- 1037, 1037', 1137, 1237: contact surface
- 1039, 1039', 1139, 1239: contact means
- 1041, 1041', 1041a, 1041b, 1141a, 1141b,:
- 1241, 1241 a, 1241 b: contact surface
- 1043': mount
- 1045': screw
- 1047': coil
- 1049': core
- 1051': opening
- 1053': spring
- 1055': gap
- 1243: spring device

## Claims

1. Mobility scooter (1001, 1101, 1201) comprising a plurality of first wheels and at least one second wheel (1005, 1105, 1205), wherein the first wheels act as drive wheels, the second wheel (1005, 1105, 1205) acts as a steerable wheel and a steering angle of the second wheel (1005, 1105, 1205) is measured relative to a steering position of the second wheel corresponding to a forward or a rearward traveling direction of the mobility scooter (1001, 1101, 1201),
**characterized in that**
based on a first value representative for a speed of the mobility scooter (1001, 1101, 1201), especially of the first wheel, a force necessary for altering the steering angle in at least one predefined region is changed, wherein the mobility scooter (1001, 1101, 1201) comprises at least one steering force altering device (1031, 1131, 1231), wherein the steering force altering device (1031, 1131, 1231) comprises at least one first movable contact means (1035, 1135, 1235) and the mobility scooter comprises at least one second contact means (1039, 1139, 1239), wherein a first contact surface (1037, 1137, 1237) of the first contact means (1035, 1135, 1235) may be brought in contact with a second contact surface (1041, 1141, 1241) of the second contact means (1039, 1139, 1239), to increase a friction between the first contact means (10,35, 1135, 1235) and the second contact means (1039, 1139, 1239).

2. Mobility scooter according to claim 1, **characterized by**
two first wheels, wherein the two first wheels are driven by one common drive unit, preferably via at least one gearbox or two first wheels are driven by independent drive units, **characterized by** a single second wheel (1005, 1105, 1205), and/or **characterized in that**
at least one first and at least one second wheel are formed by one wheel, especially acting simultaneously as a steerable wheel and a drive wheel, wherein preferably the mobility scooter (1001, 1101, 1201) comprises at least one third wheel, and/or **in that** the first wheel is a rear wheel and/or the second wheel (1005, 1105, 1205) is a front wheel with regard to a forward traveling direction of the scooter (101, 1101, 1201), wherein especially the mobility scooter (1001, 1101, 1201) comprises two rear wheels and one front wheel (1005, 1105, 1205), or **in that** all first and second wheels (1005, 1105, 1205) are separate wheels.

3. Mobility scooter according to claims 1 or 2, **characterized in that**
the steering angle is changeable, especially by an occupant, via at least one steering device (1023, 1123, 1223), like a handle bar, a joystick, a steering wheel (1023, 1123, 1223), a steering bar and/or tracking ball and the second wheel (1005, 1105, 1205) and/or the steering device (1023, 1123, 1223) is connected to at least one steering spindle (1013, 1113, 1213), wherein preferably at least one mechanic transmission unit (1011, 1013, 1111, 1113, 1211, 1213) is provided, via which a first steering signal of the steering device (1023, 1123, 1223) is mechanically transferable to the second wheel (1005, 1105, 1205), wherein the mechanic transmission unit especially comprises at least a gearbox, a cam, an axle, a shaft, a tiller, a fork arrangement (1011, 1111, 1211), a ball joint, the steering spindle (1013, 1113, 1213) and/or a mechanical link.

4. Mobility scooter according to one of the preceding claims, **characterized in that**
the first steering signal is at least partly transferable to the second wheel (1005, 1105, 1205) in form of an electronic signal, especially an analog and/or a digital electronic signal, preferably via at least one switch, at least one potentiometer and/or at least one actuator, wherein the actuator is preferably mechanically connected to the mechanic transmission unit, and **in that**
at least one, especially closed-loop, control device is connected to the at least one steering force altering device (1031, 1131, 1231), wherein the control device receives the first value and generates, especially further based on the first steering signal, a second steering signal that is transmitted to the steering force altering device, wherein especially the steering force altering device (1031, 1131, 1231) mechanically alters a force necessary for a movement of the mechanic transmission unit (1013, 1113, 1213), the second wheel (14005, 1105, 1205) and/or the steering device.

5. Mobility scooter according to one of the preceding claims, **characterized by** at least one sensing device, wherein the first value is generated by the sensing device and the first value is a rotational speed of the first wheel, of the second wheel, of the third wheel and/or of the drive unit, a power supply value, especially a voltage value, a current value and/or a power value, of the drive unit, a speed of the mobility scooter (1001, 1101, 1201) relative to a surface, especially calculated based on GPS signals, a position of a speed actuator, especially an accelerator lever, an accelerator pedal, a gas pedal, a throttle, and/or a signal provided by the speed actuator, and **characterized in that** the control device generates the second steering signal based on at least one lookup table and/or equation, wherein the relation between the first value and the force necessary for altering the steering angle, especially a force applied to the steering device when altering the steering angle, is stored in the lookup table and/or is expressed in the equation, especially as a function of stability turning characteristics, an attitude, a longitudinal and/or transversal inclination and/or a direction of travel or movement of the mobility scooter (1001, 1101, 1201) and/or a user capability, like an ability of movement, a grade of paralysis, a muscular strength and/or an age.

6. Mobility scooter according to one of the preceding claims, **characterized in that**
the force necessary to alter the steering angle is mainly constant for a first value being smaller than a first set value and is increased for a first value being equal or greater than the first set value, wherein especially the force necessary to alter the steering angle is increased as a function of the first value, especially in progressive stages, linearly, exponentially, quadratically and/or logarithmically, wherein preferably the first set value is zero, the force necessary to alter the steering angle is altered, especially increased, depending on the steering angle, preferably an absolute value of the steering angle, especially in progressive stages, linearly, exponentially, quadratically and/or logarithmically, and/or
the mechanic transmission unit (1011, 1111, 1211), the second wheel and/or the steering device comprises the at least one second contact means (1039, 1139, 1239), wherein the second contact means (1039, 1139, 1239) is preferably drivingly connected to the mechanic transmission unit (1011, 1111, 1211), the second wheel and/or the steering device, wherein preferably
the steering force altering device (1231) comprises at least one first spring device (1243), wherein preferably the first contact means (1235) and/or the second contact means is/are spring biased fixed to a structure of the mobility scooter (1201) via the first spring device (1243), wherein preferably the other of the first contact means and the second contact means is connected to the mechanic transmission unit, and/or **in that** the force is altered based on a profile of the first contact means and/or the second contact means (1039, 1139, 1239), especially by a profile of the first contact means and/or the second contact means (1039, 1139, 1239) spanned in a plane by the normal directions of the first contact surface and/or the second contact surface (1041, 1141, 1241) in different areas, especially that respective first contact surfaces and/or second surfaces (1041, 1141, 1241) are positioned in different heights relative to the respective other contact means.

7. Mobility scooter according to claim 6, **characterized by**
at least one actuating device (1033, 1133, 1233) for moving the first contact means (1035, 1135) relative to the second contact means (1039, 1139) and/or for moving the second contact means (1239) relative to the first contact means (1239), wherein preferably the actuating device provides the movement based on a pneumatic, hydraulic, electromagnetic and/or mechanic working principle, and in that
the force to alter the steering angle is altered by changing a relative position of the first contact means (1035, 1135, 1235) and the second contact means (1039, 1139, 1239), preferably the first contact surface (1037, 1137, 1237) and the second contact surface (1041, 1141, 1241), especially via the actuating device (1033, 1133, 1233), wherein preferably for a first value being lower than the first set value the first contact means and the second contact means are, especially spring biased, separated from each other and are in contact with each other, especially based on an electromagnetic force, for a first value being equal or greater than the first set value, wherein preferably the relative position is altered by moving the first contact means (1035, 1135) relative to the second contact means (1039, 1139) in a direction mainly perpendicular to a normal direction of the first contact surface (1037, 1137) and/or by moving the second contact means (1239) relative to the first contact means (1235) in a direction mainly perpendicular to a normal direction of the second contact surface (1241).

8. Mobility scooter according to one of the preceding claims, **characterized in that**,
preferably by the actuating device (1033) and/or the first spring device (1243), the force to alter the steering angle is changed by changing a pressure force by which the first contact means (1035, 1235) contacts the second contact means (1039, 1239), preferably by moving the first contact means (1035, 1235) in a direction being mainly parallel to a normal direction of the first contact surface (1037, 1237) and/or by moving the second contact means in a direction being mainly parallel to a normal direction of the second contact surface, especially by the actuating device (1033, 1233), wherein especially the movement is transmitted via at least one biasing means, preferably a second spring device, to the first contact means and/or the second contact means.

9. Mobility scooter according to one of the claims 6 to 8, **characterized in that**
the first contact surface is aligned perpendicular and the second contact surface is aligned parallel to a first axis, especially a first rotational axis of the mechanic transmission unit and/or the steering device, wherein preferably the first contact means is moved parallel to the first axis by the actuating device and/or the second contact means is moved radially to the first axis by the actuating device, the first contact surface is aligned parallel and the second contact surface is aligned perpendicular to the first axis, wherein preferably the first contact means is moved radially to the first axis by the actuating device and/or the second contact means is moved parallel to the first axis by the actuating device, the first contact surface and the second contact surface arc aligned parallel to the first axis, wherein preferably the first contact means and/or the second contact means is/are moved radially to the first axis by the actuating device, or the first contact surface and the second contact surface are aligned perpendicular to the first axis, wherein preferably the first contact means and/or the second contact means is/are moved parallel to the first axis by the actuating device.

10. Mobility scooter according to one of the preceding claims **characterized by**
at least one speed limiting device, preferably connected to the control device, wherein by the speed limiting device the speed of the mobility scooter is limited to a second value in case the steering angle exceeds a predefined second steering angle, preferably based on a second signal generated by the control device, wherein preferably the speed limiting device actuates a brake, reduces the power supply to the drive unit, limits the speed of the first wheel and/or second wheel, alters a position of and/or alters a signal provided and/or generated by a speed actuator, especially an accelerator lever, an accelerator pedal, a gas pedal, a hand throttle, and/or a throttle.

11. Method of controlling a steering of a mobility scooter according to one of the preceding claims, wherein a steering angle of the second wheel is measured relative to a steering position of the second wheel corresponding to a forward or rearward traveling direction of the conveyance device, **characterized in that**
based on a first value representative for a speed of the conveyance device, especially of the first wheel, a force necessary for altering the steering angle is changed.

12. Method according to claim 11, **characterized in that**,
preferably by at least one, especially closed-loop, control device, especially connected to at least one steering force altering device, based on the first value, preferably in combination with a first steering signal, especially generated by a steering device, a second steering signal is generated, that is especially transmitted to a steering force altering device, and/or **in that**
the first value is generated by at least one sensing device and/or the first value is a rotational speed of the first wheel, of the second wheel, of a third wheel and/or of a drive unit, a power supply value, especially a voltage value, a current value and/or a power value, of the drive unit, a speed of the mobility scooter relative to a surface, especially calculated based on GPS signals, a position of a speed actuator and/or a signal provided by the speed actuator.

13. Method according to claims 11 or 12, **characterized in that**
the second steering signal is generated based on at least one lookup table and/or equation, wherein the relation between the first value and the force necessary for altering the steering angle is stored in the lookup table and/or is expressed in the equation, especially as a function of stability turning characteristics an attitude, a longitudinal and/or transversal inclination and/or a direction of travel or movement of the mobility scooter and/or a user capability, like an ability of movement, a grade of paralysis, a muscular strength and/or an age.

14. Method according to one of the claims 11 to 13, **characterized in that**
the force necessary to alter the steering angle is mainly constant for a first value being smaller than a first set value and is increased for a first value being equal or greater than the first set value, wherein especially the force necessary to alter the steering angle is increased as a function of the first value, especially in progressive stages, linearly, exponentially, quadratically and/or logarithmically, wherein preferably the first set value is zero.

15. Method according to claims 11 to 14, **characterized in that**
the force necessary to alter the steering angle is altered, especially increased, depending on the steering angle, preferably an absolute value of the steering angle, especially in progressive stages, linearly, exponentially, quadratically and/or logarithmically.

## Patentansprüche

1. Mobilitätsroller (1001, 1101, 1201), umfassend eine Mehrzahl von ersten Rädern und mindestens ein zweites Rad (1005, 1105, 1205), wobei die ersten Räder als Antriebsräder fungieren, das zweite Rad (1005, 1105, 1205) als lenkbares Rad fungiert und ein Lenkwinkel des zweiten Rades (1005, 1105, 1205) gemessen wird relativ zu einer Lenkposition des zweiten Rades entsprechend einer Vorwärts- oder einer Rückwärtsfahrtrichtung des Mobilitätsrollers (1001, 1101, 1201),
**dadurch gekennzeichnet, dass**
auf der Grundlage eines ersten Wertes, der eine Geschwindigkeit des Mobilitätsrollers (1001, 1101, 1201), insbesondere des ersten Rades, repräsentiert, eine Kraft, die notwendig ist für eine Veränderung des Lenkwinkels in mindestens einem vorgegebenen Bereich, geändert wird, wobei der Mobilitätsroller (1001, 1101, 1201) mindestens eine Lenkkraftveränderungseinrichtung (1031, 1131, 1231) umfasst, wobei die Lenkkraftveränderungseinrichtung (1031, 1131, 1231) mindestens ein erstes bewegliches Kontaktmittel (1035, 1135, 1235) umfasst und der Mobilitätsroller mindestens ein zweites Kontaktmittel (1039, 1139, 1239) umfasst, wobei eine erste Kontaktfläche (1037, 1137, 1237) des ersten Kontaktmittels (1035, 1135, 1235) mit einer zweiten Kontaktfläche (1041, 1141, 1241) des zweiten Kontaktmittels (1039, 1139, 1239) in Kontakt gebracht werden kann, um eine Reibung zwischen dem ersten Kontaktmittel (1035, 1135, 1235) und dem zweiten Kontaktmittel (1039, 1139, 1239) zu verstärken.

2. Mobilitätsroller nach Anspruch 1, **gekennzeichnet durch**
zwei erste Räder, wobei die zwei ersten Räder **durch** eine gemeinsame Antriebseinheit angetrieben werden, vorzugsweise über mindestens ein Getriebe, oder zwei erste Räder durch unabhängige Antriebseinheiten angetrieben werden, **gekennzeichnet durch** ein einziges zweites Rad (1005, 1105, 1205), und/oder **dadurch** gekennzeichnet, dass mindestens ein erstes und mindestens ein zweites Rad **durch** ein Rad gebildet sind, das insbesondere gleichzeitig als lenkbares Rad und als Antriebsrad fungiert, wobei vorzugsweise der Mobilitätsroller (1001, 1101, 1201) mindestens ein drittes Rad umfasst, und/oder dass das erste Rad ein Hinterrad ist und/oder das zweite Rad (1005, 1105, 1205) ein Vorderrad ist in Bezug auf eine Vorwärtsfahrtrichtung des Rollers (101, 1101, 1201), wobei insbesondere der Mobilitätsroller (1001, 1101, 1201) zwei Hinterräder und ein Vorderrad (1005, 1105, 1205) umfasst, oder dass alle ersten und zweiten Räder (1005, 1105, 1205) separate Räder sind.

3. Mobilitätsroller nach Anspruch 1 oder 2, **dadurch gekennzeichnet, dass**
der Lenkwinkel änderbar ist, insbesondere durch einen Insassen, über mindestens eine Lenkeinrichtung (1023, 1123, 1223), wie ein Lenker, ein Steuerknüppel, ein Lenkrad (1023, 1123, 1223), eine Lenkstange und/oder ein Trackball, und das zweite Rad (1005, 1105, 1205) und/oder die Lenkeinrichtung (1023, 1123, 1223) mit mindestens einer Lenkspindel (1013, 1113, 1213) verbunden ist, wobei vorzugsweise mindestens eine mechanische Kraftübertragungseinheit (1011, 1013, 1111, 1113, 1211, 1213) vorgesehen ist, über die ein erstes Lenksignal der Lenkeinrichtung (1023, 1123, 1223) mechanisch an das zweite Rad (1005, 1105, 1205) übertragbar ist, wobei die mechanische Kraftübertragungseinheit insbesondere zumindest ein Getriebe, einen Nocken, eine Achse, eine Welle, ein Steuer, eine Gabelanordnung (1011, 1111, 1211), ein Kugelgelenk, die Lenkspindel (1013, 1113, 1213) und/oder eine mechanische Verbindung umfasst.

4. Mobilitätsroller nach einem der vorangehenden Ansprüche, **dadurch gekennzeichnet, dass**
das erste Lenksignal zumindest teilweise in Form eines elektronischen Signals, insbesondere eines analogen und/oder eines digitalen elektronischen Signals, vorzugsweise über mindestens einen Schalter, mindestens ein Potentiometer und/oder mindestens ein Stellglied, an das zweite Rad (1005, 1105, 1205) übertragbar ist, wobei das Stellglied vorzugsweise mechanisch mit der mechanischen Kraftübertragungseinheit verbunden ist, und dass
mindestens eine Regeleinrichtung mit der mindestens einen Lenkkraftveränderungseinrichtung (1031, 1131, 1231) verbunden ist, wobei die Regeleinrichtung den ersten Wert empfängt und, insbesondere weiter auf der Grundlage des ersten Lenksignals, ein zweites Lenksignal erzeugt, das an die Lenkkraftveränderungseinrichtung übertragen wird, wobei insbesondere die Lenkkraftveränderungseinrichtung (1031, 1131, 1231) eine Kraft, die für eine Bewegung der mechanischen Kraftübertragungseinheit (1013, 1113, 1213), des zweiten Rades (1005, 1105, 1205) und/oder der Lenkeinrichtung notwendig ist, mechanisch verändert.

5. Mobilitätsroller nach einem der vorangehenden Ansprüche, **gekennzeichnet durch** mindestens eine Messfühleinrichtung, wobei der erste Wert **durch** die Messfühleinrichtung erzeugt wird und der erste Wert eine Drehzahl des ersten Rades, des zweiten Rades, des dritten Rades und/oder der Antriebseinheit, ein Stromversorgungswert, insbesondere ein Spannungswert, ein Stromwert und/oder ein Leistungswert, der Antriebseinheit, eine Geschwindigkeit des Mobilitätsrollers (1001, 1101, 1201) relativ zu einer Oberfläche, insbesondere berechnet auf der Grundlage von GPS-Signalen, eine Position eines Geschwindigkeitsstellgliedes, insbesondere ein Beschleunigungshebel, ein Beschleunigungspedal, ein Gaspedal, eine Drosselklappe, und/oder ein **durch** das Geschwindigkeitsstellglied bereitgestelltes Signal ist, und **dadurch** gekennzeichnet, dass
die Regeleinrichtung das zweite Lenksignal auf der Grundlage mindestens einer Nachschlagetabelle und/oder Gleichung erzeugt, wobei die Beziehung zwischen dem ersten Wert und der Kraft, die für eine Veränderung des Lenkwinkels notwendig ist, insbesondere einer Kraft, die auf die Lenkeinrichtung beim Verändern des Lenkwinkels ausgeübt wird, in der Nachschlagetabelle gespeichert wird und/oder in der Gleichung ausgedrückt wird, insbesondere als eine Funktion von Stabilitätsdrehcharakteristiken, einer Lage, einer Längs- und/oder Querneigung und/oder einer Fahrt- oder Bewegungsrichtung des Mobilitätsrollers (1001, 1101, 1201) und/oder einer Fähigkeit eines Benutzers, wie eine Bewegungsfähigkeit, ein Lähmungsgrad, eine Muskelkraft und/oder ein Alter.

6. Mobilitätsroller nach einem der vorangehenden Ansprüche, **dadurch gekennzeichnet, dass** die Kraft, die für eine Veränderung des Lenkwinkels notwendig ist, für einen ersten Wert, der geringer als ein erster Sollwert ist, hauptsächlich konstant ist und für einen ersten Wert, der gleich dem oder größer als der erste Sollwert ist, erhöht ist, wobei insbesondere die Kraft, die für eine Veränderung des Lenkwinkels notwendig ist, erhöht wird als eine Funktion des ersten Wertes, insbesondere in fortschreitenden Stufen, linear, exponentiell, quadratisch und/oder logarithmisch, wobei vorzugsweise der erste Sollwert Null ist, die Kraft, die für eine Veränderung des Lenkwinkels notwendig ist, verändert, insbesondere erhöht, wird in Abhängigkeit von dem Lenkwinkel, vorzugsweise einem Absolutwert des Lenkwinkels, insbesondere in fortschreitenden Stufen, linear, exponentiell, quadratisch und/oder logarithmisch, und/oder
die mechanische Kraftübertragungseinheit (1011, 1111, 1211), das zweite Rad und/oder die Lenkeinrichtung das mindestens eine zweite Kontaktmittel (1039, 1139, 1239) umfasst, wobei das zweite Kontaktmittel (1039, 1139, 1239) vorzugsweise treibend mit der mechanischen Kraftübertragungseinheit (1011, 1111, 1211), dem zweiten Rad und/oder der Lenkeinrichtung verbunden ist, wobei vorzugsweise
die Lenkkraftveränderungseinrichtung (1231) mindestens eine erste Federeinrichtung (1243) umfasst, wobei vorzugsweise das erste Kontaktmittel (1235) und/oder das zweite Kontaktmittel über die erste Federeinrichtung (1243) an einer Struktur des Mobilitätsrollers (1201) federvorbelastet befestigt ist/sind, wobei vorzugsweise das andere der beiden genannten Kontaktmittel mit der mechanischen Kraftübertragungseinheit verbunden ist, und/oder dass die Kraft auf der Grundlage eines Profils des ersten Kontaktmittels und/oder des zweiten Kontaktmittels (1039, 1139, 1239) verändert wird, insbesondere durch ein Profil des ersten Kontaktmittels und/oder des zweiten Kontaktmittels (1039, 1139, 1239), aufgespannt in einer Ebene durch die normalen Richtungen der ersten Kontaktfläche und/oder der zweiten Kontaktfläche (1041, 1141, 1241) in unterschiedlichen Bereichen, insbesondere dass jeweilige erste Kontaktflächen und/oder zweite Flächen (1041, 1141, 1241) in unterschiedlichen Höhen relativ zu dem jeweiligen anderen Kontaktmittel positioniert sind.

7. Mobilitätsroller nach Anspruch 6, **gekennzeichnet durch**
mindestens eine Betätigungseinrichtung (1033, 1133, 1233) zum Bewegen des ersten Kontaktmittels (1035, 1135) relativ zu dem zweiten Kontaktmittel (1039, 1139) und/oder zum Bewegen des zweiten Kontaktmittels (1239) relativ zu dem ersten Kontaktmittel (1235), wobei vorzugsweise die Betätigungseinrichtung die Bewegung auf der Grundlage eines pneumatischen, hydraulischen, elektromagnetischen und/oder mechanischen Arbeitsprinzips bereitstellt, und dass
die Kraft zur Veränderung des Lenkwinkels verändert wird **durch** Ändern einer relativen Position des ersten Kontaktmittels (1035, 1135, 1235) und des zweiten Kontaktmittels (1039, 1139, 1239), vorzugsweise der ersten Kontaktfläche (1037, 1137, 1237) und der zweiten Kontaktfläche (1041, 1141, 1241), insbesondere über die Betätigungseinrichtung (1033, 1133, 1233), wobei vorzugsweise das erste Kontaktmittel und das zweite Kontaktmittel für einen ersten Wert, der geringer als der erste Sollwert ist, voneinander, insbesondere federvorbelastet, getrennt sind und für einen ersten Wert, der gleich dem oder größer als der erste Sollwert ist, einander berühren, insbesondere auf der Grundlage einer elektromagnetischen Kraft, wobei vorzugsweise die relative Position geändert wird, indem das erste Kontaktmittel (1035, 1135) in eine Richtung, die hauptsächlich senkrecht zu einer normalen Richtung der ersten Kontaktfläche (1037, 1137) verläuft, relativ zu dem zweiten Kontaktmittel (1039, 1139) bewegt wird und/oder indem das zweite Kontaktmittel (1239) in eine Richtung, die hauptsächlich senkrecht zu einer normalen Richtung der zweiten Kontaktfläche (1241) verläuft, relativ zu dem ersten Kontaktmittel (1235) bewegt wird.

8. Mobilitätsroller nach einem der vorangehenden Ansprüche, **dadurch gekennzeichnet, dass** vorzugsweise durch die Betätigungseinrichtung (1033) und/oder die erste Federeinrichtung (1243) die Kraft zur Veränderung des Lenkwinkels geändert wird durch Ändern einer Druckkraft, durch die das erste Kontaktmittel (1035, 1235) das zweite Kontaktmittel (1039, 1239) berührt, vorzugsweise durch Bewegen des ersten Kontaktmittels (1035, 1235) in eine Richtung, die hauptsächlich parallel zu einer normalen Richtung der ersten Kontaktfläche (1037, 1237) verläuft und/oder durch Bewegen des zweiten Kontaktmittels in eine Richtung, die hauptsächlich parallel zu einer normalen Richtung der zweiten Kontaktfläche verläuft, insbesondere durch die Betätigungseinrichtung (1033, 1233), wobei insbesondere die Bewegung über mindestens ein Vorbelastungsmittel, vorzugsweise eine zweite Federeinrichtung, auf das erste Kontaktmittel und/oder das zweite Kontaktmittel übertragen wird.

9. Mobilitätsroller nach einem der Ansprüche 6 bis 8, **dadurch gekennzeichnet, dass** die erste Kontaktfläche senkrecht und die zweite Kontaktfläche parallel zu einer ersten Achse, insbesondere einer ersten Rotationsachse der mechanischen Kraftübertragungseinheit und/oder der Lenkeinrichtung, ausgerichtet ist, wobei vorzugsweise das erste Kontaktmittel durch die Betätigungseinrichtung parallel zu der ersten Achse bewegt wird und/oder das zweite Kontaktmittel durch die Betätigungseinrichtung radial zu der ersten Achse bewegt wird, die erste Kontaktfläche parallel und die zweite Kontaktfläche senkrecht zu der ersten Achse ausgerichtet ist, wobei vorzugsweise das erste Kontaktmittel durch die Betätigungseinrichtung radial zu der ersten Achse bewegt wird und/oder das zweite Kontaktmittel durch die Betätigungseinrichtung parallel zu der ersten Achse bewegt wird, die erste Kontaktfläche und die zweite Kontaktfläche parallel zu der ersten Achse ausgerichtet sind,
wobei vorzugsweise das erste Kontaktmittel und/oder das zweite Kontaktmittel durch die Betätigungseinrichtung radial zu der ersten Achse bewegt wird/werden, oder die erste Kontaktfläche und die zweite Kontaktfläche senkrecht zu der ersten Achse ausgerichtet sind, wobei vorzugsweise das erste Kontaktmittel und/oder das zweite Kontaktmittel durch die Betätigungseinrichtung parallel zu der ersten Achse bewegt wird/werden.

10. Mobilitätsroller nach einem der vorangehenden Ansprüche, **gekennzeichnet durch** mindestens eine Geschwindigkeitsbegrenzungseinrichtung, die vorzugsweise mit der Regeleinrichtung verbunden ist, wobei **durch** die Geschwindigkeitsbegrenzungseinrichtung die Geschwindigkeit des Mobilitätsrollers auf einen zweiten Wert begrenzt wird, falls der Lenkwinkel einen vorgegebenen zweiten Lenkwinkel überschreitet, vorzugsweise auf der Grundlage eines zweiten Signals, das **durch** die Regeleinrichtung erzeugt wird, wobei vorzugsweise die Geschwindigkeitsbegrenzungseinrichtung eine Bremse betätigt, die Stromversorgung der Antriebseinheit reduziert, die Geschwindigkeit des ersten Rades und/oder zweiten Rades begrenzt, eine Position eines Geschwindigkeitsstellgliedes, insbesondere eines Beschleunigungshebels, eines Beschleunigungspedals, eines Gaspedals, eines Fahrhandhebels und/oder einer Drosselklappe, verändert und/oder ein **durch** ein solches Geschwindigkeitsstellglied bereitgestelltes und/oder erzeugtes Signal verändert.

11. Verfahren zum Regeln einer Lenkung eines Mobilitätsrollers nach einem der vorangehenden Ansprüche, wobei ein Lenkwinkel des zweiten Rades gemessen wird relativ zu einer Lenkposition des zweiten Rades entsprechend einer Vorwärts- oder einer Rückwärtsfahrtrichtung der Beförderungseinrichtung, **dadurch gekennzeichnet, dass** auf der Grundlage eines ersten Wertes, der eine Geschwindigkeit der Beförderungseinrichtung, insbesondere des ersten Rades, darstellt, eine Kraft, die für eine Veränderung des Lenkwinkels notwendig ist, geändert wird.

12. Verfahren nach Anspruch 11, **dadurch gekennzeichnet, dass**
vorzugsweise durch mindestens eine Regeleinrichtung, die insbesondere mit mindestens einer Lenkkraftveränderungseinrichtung verbunden ist, auf der Grundlage des ersten Wertes, vorzugsweise in Kombination mit einem ersten Lenksignal, das insbesondere durch eine Lenkeinrichtung erzeugt wird, ein zweites Lenksignal erzeugt wird, das insbesondere an eine Lenkkraftveränderungseinrichtung übertragen wird, und/oder dass
der erste Wert durch mindestens eine Messfühleinrichtung erzeugt wird und/oder der erste Wert eine Drehzahl des ersten Rades, des zweiten Rades, eines dritten Rades und/oder einer Antriebseinheit, ein Stromversorgungswert, insbesondere ein Spannungswert, ein Stromwert und/oder ein Leistungswert, der Antriebseinheit, eine Geschwindigkeit des Mobilitätsrollers relativ zu einer Oberfläche, insbesondere berechnet auf der Grundlage von GPS-Signalen, eine Position eines Geschwindigkeitsstellgliedes und/oder ein durch das Geschwindigkeitsstellglied bereitgestelltes Signal ist.

13. Verfahren nach Anspruch 11 oder 12, **dadurch gekennzeichnet, dass**
das zweite Lenksignal auf der Grundlage mindestens einer Nachschlagetabelle und/oder Gleichung erzeugt wird, wobei die Beziehung zwischen dem ersten Wert und der Kraft, die für eine Veränderung des Lenkwinkels notwendig ist, in der Nachschlagetabelle gespeichert ist und/oder in der Gleichung ausgedrückt ist, insbesondere als eine Funktion von Stabilitätsdrehcharakteristiken, einer Lage, einer Längs- und/oder Querneigung und/oder einer Fahrt- oder Bewegungsrichtung des Mobilitätsrollers und/oder einer Fähigkeit eines Benutzers, wie eine Bewegungsfähigkeit, ein Lähmungsgrad, eine Muskelkraft und/oder ein Alter.

14. Verfahren nach einem der Ansprüche 11 bis 13, **dadurch gekennzeichnet, dass** die Kraft, die für eine Veränderung des Lenkwinkels notwendig ist, für einen ersten Wert, der geringer als ein erster Sollwert ist, hauptsächlich konstant ist und für einen ersten Wert, der gleich dem oder größer als der erste Sollwert ist, erhöht ist, wobei insbesondere die Kraft, die für eine Veränderung des Lenkwinkels notwendig ist, erhöht wird als eine Funktion des ersten Wertes, insbesondere in fortschreitenden Stufen, linear, exponentiell, quadratisch und/oder logarithmisch, wobei vorzugsweise der erste Sollwert Null ist.

15. Verfahren nach den Ansprüchen 11 bis 14, **dadurch gekennzeichnet, dass** die Kraft, die für eine Veränderung des Lenkwinkels notwendig ist, verändert, insbesondere erhöht, wird in Abhängigkeit von dem Lenkwinkel, vorzugsweise einem Absolutwert des Lenkwinkels, insbesondere in fortschreitenden Stufen, linear, exponentiell, quadratisch und/oder logarithmisch.

## Revendications

1. Scooter pour mobilité (1001, 1101, 1201) comprenant plusieurs premières roues et au moins une deuxième roue (1005, 1105, 1205), dans lequel les premières roues agissent comme roues d'entraînement, la deuxième roue (1005, 1105, 1205) agit comme roue directrice et un angle de braquage de la deuxième roue (1005, 1105, 1205) est mesuré par rapport à une position de braquage de la deuxième roue correspondant à une direction de déplacement vers l'avant ou vers l'arrière du scooter pour mobilité (1001, 1101, 1201),
**caractérisé en ce que**
sur la base d'une première valeur représentative d'une vitesse du scooter pour mobilité (1001, 1101, 1201), en particulier de la première roue, une force nécessaire pour modifier l'angle de braquage dans au moins une zone prédéfinie est modifiée, le scooter pour mobilité (1001, 1101, 1201) comprenant au moins un dispositif de modification de force de braquage (1031, 1131, 1231), le dispositif de modification de force de braquage (1031, 1131, 1231) comprenant au moins un premier moyen de contact mobile (1035, 1135, 1235) et le scooter pour mobilité comprend au moins un second moyen de contact (1039, 1139, 1239), une première surface de contact (1037, 1137, 1237) du premier moyen de contact (1035, 1135, 1235) pouvant venir en contact avec une seconde surface de contact (1041, 1141, 1241) du second moyen de contact (1039, 1139, 1239), pour augmenter un frottement entre le premier moyen de contact (1035, 1135, 1235) et le second moyen de contact (1039, 1139, 1239).

2. Scooter pour mobilité selon la revendication 1, **caractérisé par** deux premières roues, les deux premières roues étant entraînées par une unité d'entraînement commune, de préférence par l'intermédiaire d'au moins une boîte de vitesses ou les deux premières roues sont entraînées par des unités d'entraînement indépendantes, **caractérisé par** une deuxième roue unique (1005, 1105, 1205), et/ou **caractérisé en ce qu'**au moins une première et au moins une deuxième roue sont formées par une roue, agissant en particulier simultanément comme roue directrice et roue motrice , dans lequel de préférence le scooter pour mobilité (1001, 1101, 1201) comprend au moins une troisième roue, et/ou **en ce que** la première roue est une roue arrière et/ou la deuxième roue (1005, 1105, 1205) est une roue avant par rapport à une direction de déplacement vers l'avant du scooter (1001, 1101, 1201) dans lequel en particulier le scooter pour mobilité (1001, 1101, 1201) comprend deux roues arrière et une roue avant (1005, 1105, 1205), ou **en ce que** toutes les premières et deuxièmes roues (1005, 1105, 1205) sont des roues séparées.

3. Scooter pour mobilité selon l'une des revendications 1 ou 2, **caractérisé en ce que** l'angle de braquage est modifiable, en particulier par un occupant, par l'intermédiaire d'au moins un dispositif de braquage (1023, 1123, 1223), comme un guidon, une manette de jeu, un volant de direction ( 1023, 1123, 1223), une barre de direction et/ou une boule de commande et la deuxième roue (1005, 1105, 1205) et/ou le dispositif de braquage (1023, 1123, 1223) sont reliés à au moins une broche de braquage ( 1013, 1113, 1213), dans lequel de préférence au moins une unité de transmission mécanique (1011, 1013, 1111, 1113, 1211, 1213) est agencée, par l'intermédiaire de laquelle un premier signal de braquage du dispositif de braquage (1023, 1123, 1223) est transférable mécaniquement à la deuxième roue (1005, 1105, 1205), dans lequel l'unité de transmission mécanique comporte en particulier au moins une boîte de vitesses, une came, un essieu, un arbre, une barre, un agencement de fourchette (1011, 1111, 1211), une rotule, la broche de braquage (1013, 1113, 1213) et/ou une liaison mécanique.

4. Scooter pour mobilité selon l'une des revendications précédentes, **caractérisé en ce que** le premier signal de braquage est au moins partiellement transférable à la deuxième roue (1005, 1105, 1205) sous la forme d'un signal électronique, en particulier un signal électronique analogique et/ou numérique, de préférence par l'intermédiaire d'au moins un commutateur, au moins un potentiomètre et/ou au moins un actionneur, dans lequel l'actionneur est de préférence relié mécaniquement à l'unité de transmission mécanique, et **en ce que**
au moins un dispositif de commande, en particulier à boucle fermée, est relié au au moins un dispositif de modification de force de braquage (1031, 1131, 1231), dans lequel le dispositif de commande reçoit la première valeur et produit, en particulier en outre sur la base du premier signal de braquage, un second signal de braquage qui est transmis au dispositif de modification de force de braquage dans lequel en particulier le dispositif de modification de force de braquage (1031, 1131, 1231) modifie mécaniquement une force nécessaire pour un déplacement de l'unité de transmission mécanique (1013, 1113, 1213), de la deuxième roue (1005, 1105, 1205) et/ou du dispositif de direction.

5. Scooter pour mobilité selon l'une quelconque des revendications précédentes, **caractérisé par** au moins un dispositif de détection, dans lequel la première valeur est produite par le dispositif de détection et la première valeur est la vitesse de rotation de la première roue, de la deuxième roue, de la troisième roue et/ou de l'unité d'entraînement, une valeur d'alimentation en énergie, en particulier une valeur de tension, une valeur de courant et/ou une valeur de puissance, de l'unité d'entraînement, une vitesse du scooter pour mobilité (1001, 1101, 1201) par rapport à une surface, calculée en particulier sur la base de signaux GPS, une position d'un actionneur de vitesse, en particulier un levier d'accélérateur, une pédale d'accélérateur, une pédale des gaz, un papillon, et/ou un signal fourni par l'actionneur de vitesse, et **caractérisé en ce que** le dispositif de commande produit le second signal de braquage sur la base d'au moins une table de consultation et/ou une équation, la relation entre la première valeur et la force nécessaire pour modifier l'angle de braquage, en particulier une force appliquée au dispositif de braquage lors de la modification de l'angle de braquage, est mémorisée dans la table de consultation et/ou est exprimée dans l'équation, en particulier en fonction de caractéristiques de stabilité d'un virage, une attitude, une inclinaison longitudinale et/ou transversale et/ou une direction de déplacement ou de mouvement du scooter pour mobilité (1001, 1101, 1201) et/ou une capacité de l'utilisateur, comme une capacité de mouvement, un état de paralysie, une force musculaire et/ou l'âge.

6. Scooter pour mobilité selon l'une quelconque des revendications précédentes, **caractérisé en ce que** la force nécessaire pour modifier l'angle de braquage est essentiellement constante pour une première valeur inférieure à une première valeur de consigne et est augmentée pour une première valeur égale ou supérieure à la première valeur de consigne, dans lequel en particulier la force nécessaire pour modifier l'angle de braquage est augmentée en fonction de la première valeur, en particulier par étapes progressives, linéairement, exponentiellement, quadratiquement et/ou logarithmiquement, dans lequel de préférence, la première valeur de consigne est zéro, la force nécessaire pour modifier l'angle de braquage est modifiée, en particulier augmentée, en fonction de l'angle de braquage, de préférence d'une valeur absolue de l'angle de braquage, en particulier par étapes progressives, linéairement, exponentiellement, quadratiquement et/ou logarithmiquement, et/ou l'unité de transmission mécanique (1011, 1111, 1211), la deuxième roue et/ou le dispositif de braquage comprennent les au moins un second moyen de contact (1039, 1139, 1239), dans lequel le second moyen de contact (1039, 1139, 1239) est de préférence relié de manière menante à l'unité de transmission mécanique (1011, 1111, 1211), à la seconde roue et/ou au dispositif de braquage, dans lequel de préférence le dispositif de modification de force de braquage (1231) comprend au moins un premier dispositif à ressort (1243), dans lequel de préférence le premier moyen de contact (1235) et/ou le second moyens de contact est/sont fixés en étant rappelés par ressort sur une structure du scooter pour mobilité (1201) par l'intermédiaire du premier dispositif à ressort (1243), dans lequel de préférence l'autre du premier moyen de contact et du second moyen de contact est relié à l'unité de transmission mécanique, et/ou **en ce que** la force est modifiée sur la base d'un profil du premier moyen de contact et/ou du second moyen de contact (1039, 1139, 1239), en particulier par un profil du premier moyen de contact et/ou du second moyen de contact (1039, 1139, 1239) engendré dans un plan par les directions perpendiculaires à la première surface de contact et/ou la seconde surface de contact (1041, 1141, 1241) dans des zones différentes, en particulier ces premières surfaces de contact et/ou secondes surfaces (1041, 1141, 1241) respectives sont positionnées à des hauteurs différentes par rapport à l'autre moyen de contact respectif.

7. Scooter pour mobilité selon la revendication 6, **caractérisé par** au moins un dispositif d'actionnement (1033, 1133, 1233) pour déplacer le premier moyen de contact (1035, 1135) par rapport au second moyen de contact (1039, 1139) et/ou pour déplacer le second moyen de contact (1239) par rapport au premier moyen de contact (1239), dans lequel de préférence le dispositif d'actionnement assure le déplacement sur la base d'un principe actif pneumatique, hydraulique, électromagnétique et/ou mécanique, et en ce que la force pour modifier l'angle de braquage est modifiée en changeant une position relative du premier moyen de contact (1035, 1135, 1235) et du second moyen de contact (1039, 1139, 1239), de préférence, la première surface de contact (1037, 1137, 1237) et la seconde surface de contact (1041, 1141, 1241), en particulier par l'intermédiaire du dispositif d'actionnement (1033, 1133, 1233), dans lequel, de préférence, pour une première valeur inférieure à la première valeur de consigne le premier moyen de contact et le second moyen de contact sont, en particulier étant rappelés par ressort, séparés l'un de l'autre et sont mis en contact l'un avec l'autre, en particulier sur la base d'une force électromagnétique, pour une première valeur égale ou supérieure à la première valeur de consigne, dans lequel de préférence la position relative est changée en déplaçant le premier moyen de contact (1035, 1135) par rapport au second moyen de contact (1039, 1139) dans une direction essentiellement perpendiculaire à une direction normale par rapport à la première surface de contact (1037, 1137) et/ou en déplaçant le second moyen de contact (1239) par rapport au premier moyen de contact (1235 ) dans une direction essentiellement perpendiculaire à une direction normale par rapport à la seconde surface de contact (1241).

8. Scooter pour mobilité selon l'une quelconque des revendications précédentes, **caractérisé en ce que**, de préférence par le dispositif d'actionnement (1033) et/ou le premier dispositif à ressort (1243), la force pour modifier l'angle de braquage est modifiée en changeant une force de pression par laquelle le premier moyen de contact (1035, 1235) sont en contact avec le second moyen de contact (1039, 1239), de préférence en déplaçant le premier moyen de contact (1035, 1235) dans une direction qui est essentiellement parallèle à une direction normale par rapport à la première surface de contact (1037, 1237) et/ou en déplaçant le second moyen de contact dans une direction qui est essentiellement parallèle à une direction normale par rapport à la seconde surface de contact, en particulier par le dispositif d'actionnement (1033, 1233), dans lequel en particulier le mouvement est transmis par l'intermédiaire d'au moins un moyen de sollicitation , de préférence un second dispositif à ressort, au premier moyen de contact et/ou au second moyen de contact.

9. Scooter pour mobilité selon l'une des revendications 6 à 8, **caractérisé en ce que** la première surface de contact est orientée perpendiculairement, et la seconde surface de contact est parallèle par rapport à un premier axe, en particulier un premier axe de rotation de l'unité de transmission mécanique et/ou du dispositif de braquage, dans lequel de préférence le premier moyen de contact est déplacé parallèlement au premier axe par le dispositif d'actionnement et/ou le second moyen de contact est déplacé radialement par rapport au premier axe par le dispositif d'actionnement, la première surface de contact est alignée parallèlement, et la seconde surface de contact est alignée perpendiculairement par rapport au premier axe, dans lequel de préférence le premier moyen de contact est déplacé radialement par rapport au premier axe par le dispositif d'actionnement et/ou le second moyens de contact est déplacé parallèlement au premier axe par le dispositif d'actionnement, la première surface de contact et la seconde surface de contact sont alignées parallèlement au premier axe, dans lequel de préférence le premier moyen de contact et/ou le second moyen de contact est/sont déplacés radialement vers le premier axe par le dispositif d'actionnement, ou la première surface de contact et la seconde surface de contact sont alignées perpendiculairement au premier axe, dans lequel de préférence le premier moyen de contact et/ou le second moyen de contact est/sont déplacés parallèlement au premier axe par le dispositif d'actionnement.

10. Scooter pour mobilité selon l'une quelconque des revendications précédentes, **caractérisé par** au moins un dispositif limiteur de vitesse, de préférence relié au dispositif de commande, dans lequel, par le dispositif limiteur de vitesse la vitesse du scooter pour mobilité est limitée à une deuxième valeur dans le cas où l'angle de braquage dépasse un deuxième angle de braquage prédéfini, de préférence sur la base d'un second signal produit par le dispositif de commande, de préférence dans lequel le dispositif limiteur de vitesse actionne un frein, réduit l'alimentation en énergie de l'unité d'entraînement, limite la vitesse de la première roue et/ou la deuxième roue, modifie une position et/ou modifie un signal fourni et/ou produit par un actionneur de vitesse, en particulier un levier d'accélérateur, une pédale d'accélérateur, une pédale des gaz, un accélérateur à main, et/ou un organe d'étranglement.

11. Procédé de commande d'un braquage d'un scooter pour mobilité selon l'une quelconque des revendications précédentes, dans lequel un angle de braquage de la deuxième roue est mesuré par rapport à une position de braquage de la deuxième roue correspondant à une direction de déplacement vers l'avant ou vers l'arrière du dispositif de transport, **caractérisé en ce que** sur la base d'une première valeur représentative d'une vitesse du dispositif de transport, en particulier de la première roue , une force nécessaire pour modifier l'angle de braquage est modifiée.

12. Procédé selon la revendication 11, **caractérisé en ce que**, de préférence, par au moins un dispositif de commande, en particulier à boucle fermée, en particulier relié à au moins un dispositif de modification de force de braquage, sur la base de la première valeur, de préférence en combinaison avec un premier signal de braquage, en particulier produit par un dispositif de braquage, un second signal de braquage est produit, qui est en particulier transmis à un dispositif de modification de force de braquage, et/ou **en ce que** la première valeur est produite par au moins un dispositif de détection et/ou la première valeur est une vitesse de rotation de la première roue, de la deuxième roue, d'une troisième roue et/ou d'une unité d'entraînement, une valeur d'alimentation en énergie, en particulier une valeur de tension, une valeur de courant et/ou une valeur de puissance, de l'unité d'entraînement, une vitesse du scooter pour mobilité par rapport à une surface, en particulier calculée sur la base de signaux GPS, une position d'un actionneur de vitesse et/ou d'un signal fourni par l'actionneur de vitesse.

13. Procédé selon les revendications 11 ou 12, **caractérisé en ce que** le second signal de braquage est produit sur la base d'au moins une table de consultation et/ou une équation, dans laquelle la relation entre la première valeur et la force nécessaire pour modifier l'angle de braquage est mémorisée dans la table de consultation et/ou est exprimée dans l'équation, en particulier en fonction de caractéristiques de stabilité en virage, d'une attitude, d'une inclinaison longitudinale et/ou transversale et/ou d'une direction de déplacement ou de mouvement du scooter pour mobilité et/ou d'une capacité de l'utilisateur, comme une capacité de mouvement, un état de paralysie, une force musculaire et/ou l'âge.

14. Procédé selon l'une quelconque des revendications 11 à 13, **caractérisé en ce que** la force nécessaire pour modifier l'angle de braquage est essentiellement constante pour une première valeur inférieure à une première valeur de consigne et est augmentée pour une première valeur égale ou supérieure à la première valeur de consigne, en particulier dans lequel la force nécessaire pour modifier l'angle de braquage est augmentée en fonction de la première valeur, en particulier par étapes progressives, linéairement, exponentiellement, quadratiquement et/ou logarithmiquement, dans lequel de préférence, la première valeur de consigne est zéro.

15. Procédé selon l'une quelconque des revendications 11 à 14, **caractérisé en ce que** la force nécessaire pour modifier l'angle de braquage est modifiée, en particulier augmentée, en fonction de l'angle de braquage, de préférence une valeur absolue de l'angle de braquage, en particulier par étapes progressives, linéairement, exponentiellement, quadratiquement et/ou logarithmiquement.
